# EUROPEAN PATENT APPLICATION

(11) **EP 4 764 175 A1**
(43) Date of publication of application: **24.06.2026**
(21) Application number: 25224840.6
(22) Date of filing: 18.12.2025
(51) Int. Cl.: F01N 3/021, F01N 3/20, F01N 13/00

(54) **WORKING VEHICLE**

(30) Priority: 23.12.2024 JP 2024226806
(71) Applicant: Kubota Corporation, Osaka-shi, Osaka 556-8601 (JP)
(72) Inventor: SONODA, Shunsuke, Sakai-shi (JP); NAKATSUKA, Hiroki, Sakai-shi (JP)
(74) Representative: Schlegel, Sebastian

(57) **Abstract**

A work vehicle includes an exhaust gas purification device that purifies exhaust gas discharged from an engine, and a fulcrum portion that is disposed on an upper side of the exhaust gas purification device and is a rotation fulcrum of a hood. The exhaust gas purification device includes a DPF case that collects particulate matter in exhaust gas discharged from the engine, and an SCR case that purifies nitrogen oxides in the exhaust gas, in which the DPF case and the SCR case are disposed such that a longitudinal direction of the DPF case and the SCR case faces a front-rear direction, and are disposed side by side in a left-right direction.

## Description

The disclosure relates to a technique of a working vehicle.

### Background

Conventionally, a technique of a working vehicle including an exhaust gas purification device and the like is known. For example, JP 6438341 B2 discloses such a configuration.

The tractor described in Patent Literature 1 includes a diesel particulate filter (DPF), a hood shield plate, and the like. The DPF is configured to collect particulate matter in the exhaust gas with the DPF. The hood shield plate is disposed such that a plate surface of the hood shield plate faces the front-rear direction. The hood shield plate is disposed on the rear side of the DPF and is formed so as to cover the DPF from the back surface. The hood covering the DPF and the like is configured to rotate about an upper end of the hood shield plate as a fulcrum.

In a case where the overall length of the hood is long, it may be difficult to see the front of the tractor from the operator's seat. Therefore, a technique capable of shortening the overall length of the hood is desired.

### Summary

One aspect of the present disclosure has been made in view of the above circumstances, and an object thereof is to provide a working vehicle capable of shortening the overall length of a hood.

The problem to be solved by one aspect of the present disclosure is as described above, and units for solving the problem will be described below.

In one aspect of the present disclosure, a work vehicle includes an exhaust gas purification device that purifies exhaust gas discharged from an engine, and a fulcrum portion that is disposed on an upper side of the exhaust gas purification device and is a rotation fulcrum of a hood.

According to one aspect of the present disclosure, an overall length of the hood can be shortened.

In one aspect of the present disclosure, the exhaust gas purification device includes a first case that collects particulate matter in exhaust gas discharged from the engine; and a second case that purifies nitrogen oxides in the exhaust gas.

According to one aspect of the present disclosure, the overall length of the hood can be shortened.

In one aspect of the present disclosure, the first case and the second case are disposed such that a longitudinal direction of the first case and the second case faces a front-rear direction, and are disposed side by side in a left-right direction.

According to one aspect of the present disclosure, a left-right width of the hood can be reduced.

In one aspect of the present disclosure, the work vehicle further includes an outer member that surrounds left and right outer sides and an upper side of the first case and the second case, in which the fulcrum portion includes a rotation shaft that is provided on the outer member and rotatably supports the hood.

According to one aspect of the present disclosure, the hood is less likely to be displaced in a twisting direction.

In one aspect of the present disclosure, the work vehicle further includes a support member that has the outer member and supports the first case and the second case.

According to one aspect of the present disclosure, the first case, the second case, and the fulcrum portion can be supported by a common member (support member).

In one aspect of the present disclosure, the support member is formed in a frame shape surrounding an upper portion of the engine from outside in a horizontal direction.

According to one aspect of the present disclosure, the height of the hood can be reduced.

In one aspect of the present disclosure, the rotation shaft is disposed so as to fit within a left-right width of the support member.

According to one aspect of the present disclosure, a left-right width of the hood can be reduced.

According to one aspect of the present disclosure, the overall length of the hood can be shortened.

### Brief description of drawings

- Fig. 1: is a side view illustrating a left portion of a tractor according to one aspect of the present disclosure;
- Fig. 2: is a side view illustrating a right part of the tractor;
- Fig. 3: is a side view illustrating equipment inside a hood;
- Fig. 4: is a front view of the same;
- Fig. 5: is an enlarged side view illustrating an oil cooler, a condenser, and a slide mechanism;
- Fig. 6: is an enlarged side sectional view of the same;
- Fig. 7: is a side view illustrating a positional relationship between an oil cooler and the like and a front wheel;
- Fig. 8: is a side view illustrating an exhaust gas purification device, a support member, and the like;
- Fig. 9: is a plan view of the same;
- Fig. 10A: is a plan view illustrating an exhaust gas purification device and various sensors;
- Fig. 10B: is a side view illustrating a diesel particulate filter (DPF) and various sensors;
- Fig. 10C: is a cross-sectional view taken along line A1-A1 in Fig. 10A;
- Fig. 11A: is a perspective view illustrating a support member and a fulcrum portion;
- Fig. 11B: is a perspective view of the same;
- Fig. 12A: is a side view illustrating a radiator, a DPF, a cooler connection pipe, and the like;
- Fig. 12B: is a cross-sectional view taken along line A2-A2 in Fig. 12A;
- Fig. 13A: is a plan view illustrating an exhaust gas purification device, the cooler connection pipe, and the like;
- Fig. 13B: is a bottom view of the same;
- Fig. 14: is a cross-sectional view taken along line A3-A3 in Fig. 13B;
- Fig. 15: is a side view illustrating various members disposed in a lower right portion of the cabin;
- Fig. 16: is a front view of a cover member taken along line A4-A4 in Fig. 15;
- Fig. 17A: is a side view illustrating a fuel tank, a urea solution tank, and the like;
- Fig. 17B: is a side cross-sectional view of the same;
- Fig. 18: is a cross-sectional view taken along line A6-A6 in Fig. 17A;
- Fig. 19A: is a plan view illustrating a fuel tank, a urea solution tank, and a urea solution pump;
- Fig. 19B: is a rear view of the fuel tank taken along line A7-A7 depicted in Fig. 19A; and
- Fig. 20: is a cross-sectional view taken along line A5-A5 in Fig. 15.

### Description of embodiments

In the following description, directions indicated by arrows U, D, F, B, L, and R in the drawings are defined as an upward direction, a downward direction, a forward direction, a backward direction, a left direction, and a right direction, respectively.

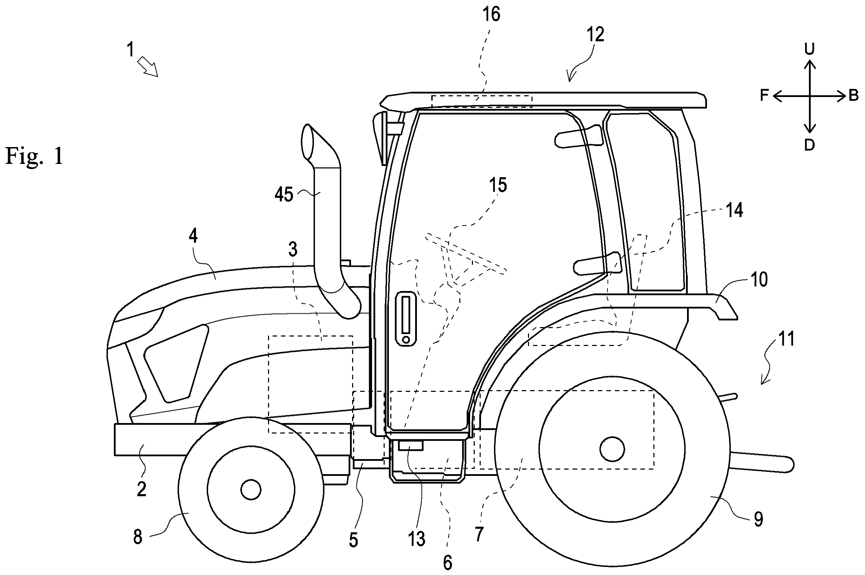

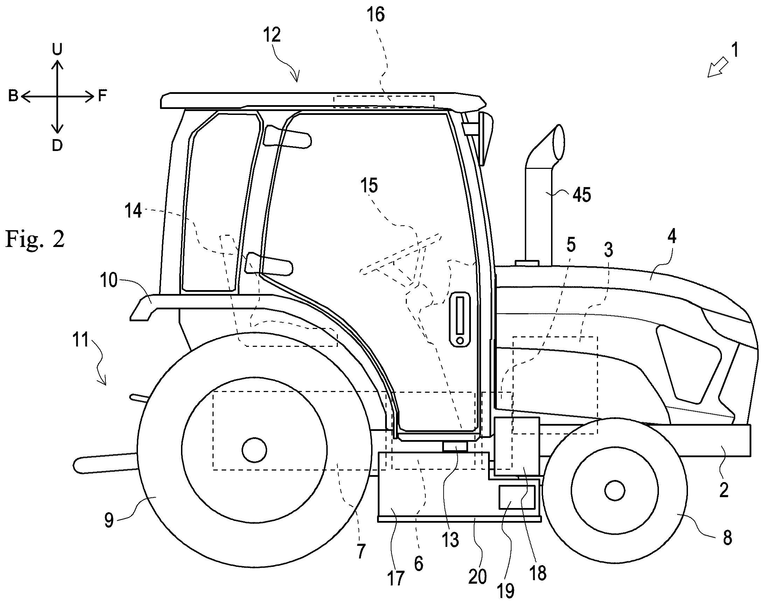

First, an overall configuration of a tractor 1 that is a working vehicle according to one aspect of the present disclosure will be described. As illustrated in Figs. 1 and 2, the tractor 1 mainly includes a machine body frame 2, an engine 3, a hood 4, a flywheel housing 5, a clutch housing 6, a transmission case 7, front wheels 8, rear wheels 9, fenders 10, a lifting device 11, a cabin 12, and the like.

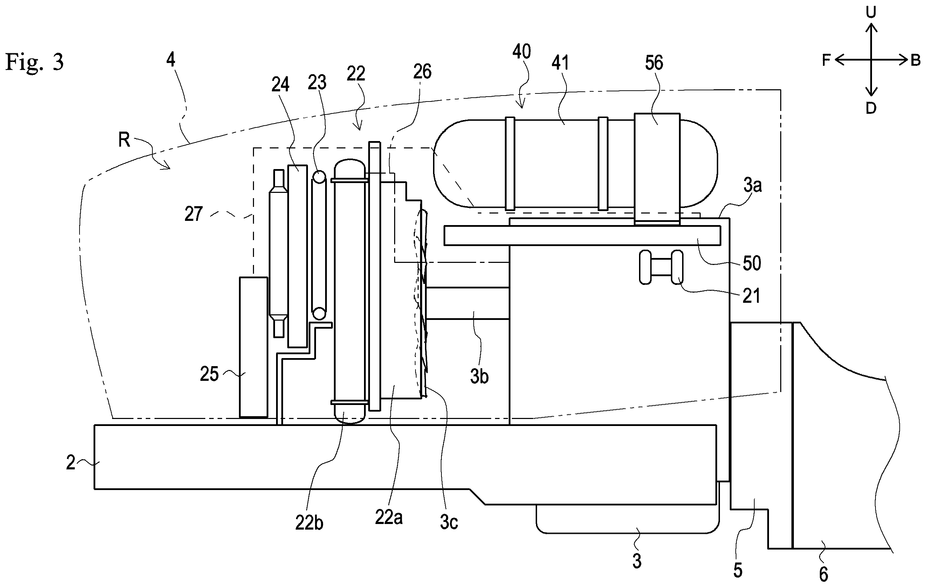

The machine body frame 2 includes a cast part that is a portion formed by casting, and a predetermined sheet metal for fixing a predetermined member to the cast portion. Note that the configuration of the machine body frame 2 is not limited to the present embodiment. Note that the machine body frame 2 may be formed in a frame shape by appropriately combining a plurality of panel members, for example. The machine body frame 2 is disposed in a front portion of the tractor 1 with its longitudinal direction oriented in the front-rear direction. The engine 3 is fixed to a rear portion of the machine body frame 2. The engine 3 is covered with the hood 4. The hood 4 is formed in a substantially box shape with a lower portion and a rear portion opened. The machine body frame 2 and the hood 4 form an engine room R in which the engine 3 and a cooling device such as a radiator 22 to be described later are disposed (see Fig. 3). The flywheel housing 5, the clutch housing 6, and the transmission case 7 are provided in a rear portion of the engine 3.

A flywheel (not illustrated) is housed in the flywheel housing 5. The clutch housing 6 is disposed on the rear side of the flywheel housing 5. The clutch housing 6 houses a transmission that changes the speed of the power from the engine 3 and a clutch (not illustrated). The transmission case 7 is disposed on the rear side of the clutch housing 6. The transmission (not illustrated) is housed in the transmission case 7.

The front portion of the machine body frame 2 is supported by the pair of left and right front wheels 8 through a front axle mechanism (not illustrated). A rear portion of the transmission case 7 is supported by the pair of left and right rear wheels 9 through a rear axle mechanism (not illustrated). The pair of left and right rear wheels 9 are substantially covered from above by the fenders 10.

The lifting device 11 is provided at the rear portion of the transmission case 7. Various work devices (for example, a cultivator or the like) can be attached to the lifting device 11. The lifting device 11 can lift and lower the attached work device by an actuator such as a hydraulic cylinder.

Power of the engine 3 is shifted by the transmission (not illustrated) or the like housed in the transmission case 7, and then is transmitted to the front axle mechanism, and can be transmitted to the front wheels 8 via the front axle mechanism. Further, the power shifted by the transmission can be transmitted to the rear wheel 9 via the rear axle mechanism. In this manner, the front wheels 8 and the rear wheels 9 are rotationally driven by the power of the engine 3, and the tractor 1 can travel. In addition, the work device attached to the lifting device 11 can be driven by the power of the engine 3.

The cabin 12 is provided behind the engine 3 and the hood 4. A front portion of the cabin 12 is placed on a vehicle body (the transmission case 7 or the like) through a cabin support member 13. Further, a rear portion of the cabin 12 is placed on the vehicle body through a predetermined member (not illustrated). An interior space in which an operator rides is formed inside the cabin 12. An air-conditioning unit 16 is provided on the roof of the cabin 12, and the temperature of the interior space can be adjusted by operating the air-conditioning unit 16.

In the interior space, an operator's seat 14 on which an operator sits is disposed. Further, a steering wheel 15 for adjusting the turning angle of the front wheels 8 is disposed in the front portion of the cabin 12. Furthermore, a relatively large number of operation tools such as a main shift lever and an auxiliary shift lever are disposed in the right portion of the cabin 12. Further, a fuel tank 17 that stores fuel, a urea solution tank 18 that stores urea solution, a urea solution pump 19 for supplying urea solution in the urea solution tank 18 to an exhaust gas purification device 40 (see Fig. 3) to be described later, and the like are disposed below a right front portion of the cabin 12. The fuel tank 17 and the like are supported by a support base 20 to be described later. Note that, in Fig. 2, the fuel tank 17, the urea solution tank 18, and the like are schematically illustrated. Although not illustrated, the fuel tank 17 is also disposed below a lower left portion of the cabin 12.

Next, the arrangement of the respective members in the hood 4 (engine room R) will be described with reference to Figs. 3 to 7. As illustrated in Fig. 3, the engine 3, a supercharger 21, the radiator 22, an oil cooler 23, a condenser 24, an intercooler 25, the exhaust gas purification device 40, and the like are disposed in the hood 4.

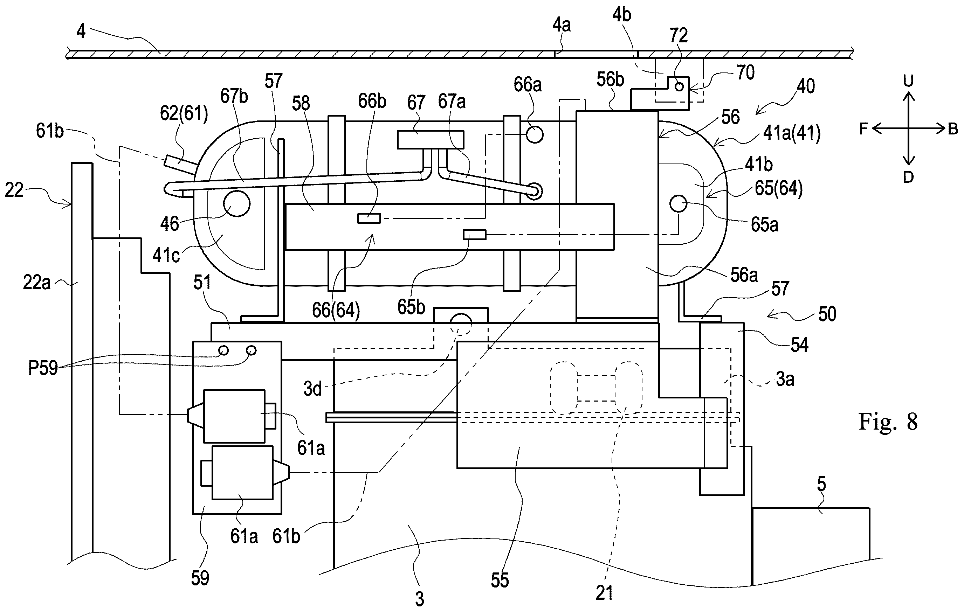

The engine 3 is disposed in a rear portion of the engine room R. The engine 3 is supported by the machine body frame 2. The engine 3 includes a cylinder block and a cylinder head (not illustrated). An upper portion of the engine 3 is configured by a head cover 3a or the like that covers the cylinder head. A breather pipe 3d connected to an air cleaner (not illustrated) is attached to the head cover 3a (see Fig. 8). The gas in the engine 3 is discharged to the outside of the engine 3 through the breather pipe 3d, whereby the pressure in the engine 3 is appropriately maintained.

The engine 3 is provided with a shaft 3b protruding forward, a cooling fan 3c fixed to the shaft 3b, and the like. The engine 3 can drive the cooling fan 3c by rotating the shaft 3b. When the cooling fan 3c is driven, air in front of the cooling fan 3c is sucked and sent rearward.

The supercharger 21 sends compressed air to the engine 3. The supercharger 21 is attached to a left side surface of the engine 3. Exhaust gas flows into the supercharger 21 from the engine 3. The supercharger 21 compresses air by rotating the turbine with the introduced exhaust gas. The compressed air is sent to an intercooler 25 to be described later.

The radiator 22 cools the cooling water of the engine 3. The radiator 22 is disposed on the front side of the engine 3 (so as to overlap in front view). The radiator 22 is fixed to the vehicle body. The radiator 22 is connected to the engine 3 through a radiator connection pipe 26 so that cooling water circulates between the radiator 22 and the engine 3. Although one radiator connection pipe 26 is schematically illustrated in Fig. 3 for convenience of description, actually, two radiator connection pipes 26 are connected to the radiator 22 and the engine 3. The radiator 22 includes a fan shroud 22a and a core 22b.

The fan shroud 22a guides air toward the cooling fan 3c. The fan shroud 22a is formed so as to surround the cooling fan 3c from the outer peripheral side. The core 22b exchanges heat between cooling water of the engine 3 and air flowing through the engine room R. The core 22b is disposed on a front side of the fan shroud 22a. In a case where the cooling fan 3c is driven, the air passes from the front to the rear of the core 22b. At this time, the radiator 22 cools the cooling water by heat exchange between the air and the cooling water.

The oil cooler 23 cools the oil. The oil cooler 23 is formed in a substantially rectangular shape in front view. The oil cooler 23 is disposed on a front side of the radiator 22. The oil cooler 23 is connected to a hydraulic device through a tube in which oil flows (not illustrated). In the case where the cooling fan 3c is driven, the air passes from the front to the rear of the oil cooler 23. At this time, the oil cooler 23 cools the oil by heat exchange between the air and the oil. The oil is fed to a hydraulic device through the tube.

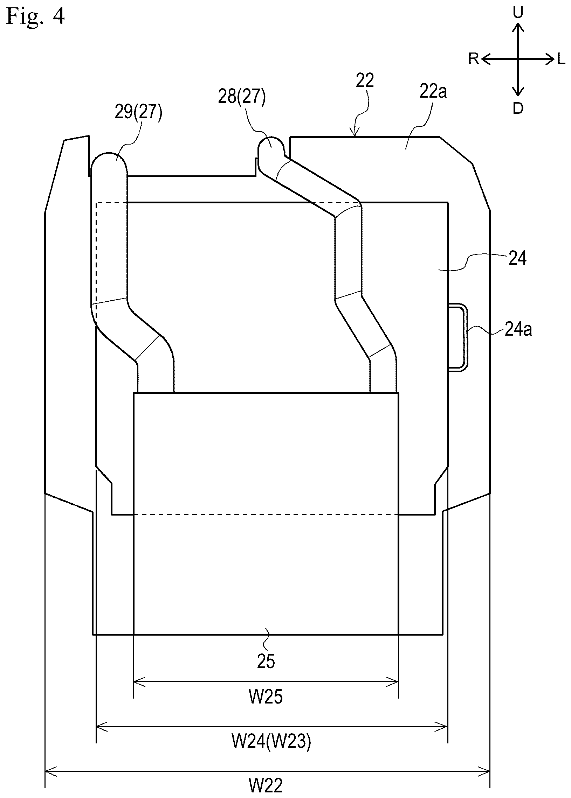

The condenser 24 cools the refrigerant of the air-conditioning unit 16. The condenser 24 is formed in a substantially rectangular shape in front view (see Fig. 4). The condenser 24 is disposed on a front side of the oil cooler 23. The condenser 24 is connected to the air-conditioning unit 16 through a pipe in which a refrigerant flows (not illustrated). In the case where the cooling fan 3c is driven, the air passes from the front to the rear of the condenser 24. At this time, the condenser 24 cools the refrigerant by heat exchange between the air and the refrigerant. Since the condenser 24 is disposed on the front side of the oil cooler 23, the refrigerant can be efficiently cooled before heat exchange is performed in the oil cooler 23. The refrigerant cooled by the condenser 24 is supplied to the air-conditioning unit 16 through the pipe.

The intercooler 25 cools the compressed air supplied to the engine 3. The condenser 24 is formed in a substantially rectangular shape in front view (see Fig. 4). The intercooler 25 is fixed to the vehicle body and disposed on the front side of the condenser 24. Further, the lower end of the intercooler 25 is disposed at a position lower than lower ends of the oil cooler 23 and the condenser 24. The intercooler 25 is connected to the engine 3 and the supercharger 21 through a cooler connection pipe 27. Although one cooler connection pipe 27 is schematically illustrated in Fig. 3 for convenience of description, actually, the engine 3, the supercharger 21, and the intercooler 25 are connected by two cooler connection pipes 27.

Air (compressed air) compressed by the supercharger 21 flows into the intercooler 25 through the cooler connection pipe 27. In the case where the cooling fan 3c is driven, air passes from the front to the rear of the intercooler 25. The intercooler 25 cools the compressed air by heat exchange between the air and the compressed air. Since the intercooler 25 is disposed on the front side of the condenser 24, the compressed air can be efficiently cooled before heat exchange is performed in the condenser 24. The compressed air cooled by the intercooler 25 is supplied to the engine 3 through the cooler connection pipe 27.

The exhaust gas purification device 40 purifies the exhaust gas discharged from the engine 3. The exhaust gas purification device 40 will be described later.

As illustrated in Fig. 4, a left-right width W25 (width along the left-right direction) of the intercooler 25 is smaller than a left-right width W23 of the oil cooler 23, a left-right width W24 of the condenser 24, and a left-right width W22 of the radiator 22. Further, the left-right width W23 of the oil cooler 23 is substantially the same as the left-right width W24 of the condenser 24. Furthermore, the left-right widths W23 and W24 of the condenser 24 and the oil cooler 23 are smaller than the left-right width W22 of the radiator 22. Note that the left-right width W22 of the radiator 22 in the present embodiment is the left-right width of the fan shroud 22a.

In the present embodiment, the oil cooler 23 and the condenser 24 are disposed between the radiator 22 having the largest left-right width W22 and the intercooler 25 having the smallest left-right width W25. The oil cooler 23 and the condenser 24 (a plurality of cooling devices) are configured to slide with respect to the vehicle body.

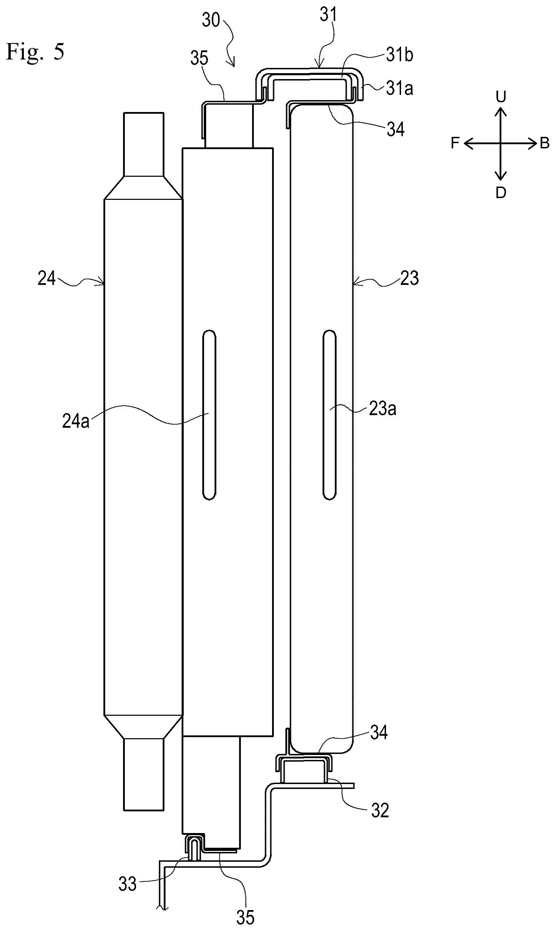

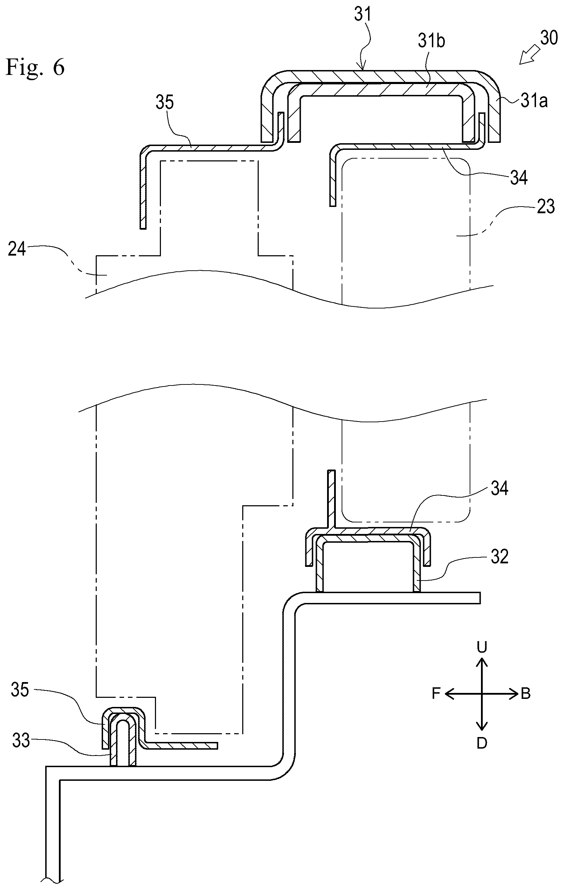

Figs. 5 and 6 illustrate an example of the configuration of the slide mechanism 30 that slides the oil cooler 23 and the like. Hereinafter, the slide mechanism 30 will be specifically described. The slide mechanism 30 includes an upper rail 31, a first lower rail 32, a second lower rail 33, a first slide unit 34, and a second slide unit 35.

The upper rail 31 guides the oil cooler 23 and the condenser 24 in the left-right direction. The upper rail 31 is formed in an elongated shape extending left and right. The upper rail 31 is disposed above the oil cooler 23 (so as to overlap in plan view). The upper rail 31 has an outer member 31a and an inner member 31b. The outer member 31a is formed in a shape in which a lower portion is opened (an inverted U shape in a side view in Figs. 5 and 6). The inner member 31b is disposed inside the outer member 31a. A gap is formed between a front portion of the outer member 31a and a front portion of the inner member 31b, and a rear portion of the outer member 31a and a rear portion of the inner member 31b.

The first lower rail 32 guides the oil cooler 23 in the left-right direction. The first lower rail 32 is disposed below the oil cooler 23. The second lower rail 33 guides the condenser 24 in the left-right direction. The second lower rail 33 is disposed below the condenser 24. The upper rail 31, the first lower rail 32, and the second lower rail 33 are fixed to the vehicle body.

The first slide unit 34 is a portion that slides with respect to the upper rail 31 and the first lower rail 32. The first slide unit 34 is fixed to both upper and lower ends of the oil cooler 23. The upper first slide unit 34 is formed so that a portion (a rear portion in Figs. 5 and 6) protrudes upward. A protruding portion is disposed in a gap between the rear portion of the outer member 31a and the rear portion of the inner member 31b. As a result, the upper first slide unit 34 can slide in the left-right direction with respect to the upper rail 31. The lower first slide unit 34 is attached to the first lower rail 32 so as to hold the first lower rail 32 from front and rear. As a result, the lower first slide unit 34 can slide in the left-right direction with respect to the first lower rail 32.

The second slide unit 35 is a portion that slides with respect to the upper rail 31 and the second lower rail 33. The second slide unit 35 is fixed to both upper and lower ends of the condenser 24. A portion (a rear portion in Figs. 5 and 6) of the upper second slide unit 35 is formed so as to protrude upward. The protruding portion is disposed in a gap between the front portion of the outer member 31a and the front portion of the inner member 31b. As a result, the upper second slide unit 35 can slide in the left-right direction with respect to the upper rail 31. A lower portion of the lower first slide unit 34 is attached to the second lower rail 33 so as to hold the second lower rail 33 from front and rear. As a result, the lower second slide unit 35 can slide in the left-right direction with respect to the second lower rail 33.

The oil cooler 23 is guided by the upper rail 31 and the like and can slide in the left-right direction as the first slide unit 34 slides with respect to the upper rail 31 and the first lower rail 32. Further, the condenser 24 can be guided by the upper rail 31 and the like and can slide in the left-right direction as the second slide unit 35 slides with respect to the upper rail 31 and the second lower rail 33.

When performing maintenance of the oil cooler 23 and the condenser 24, a worker can slide the oil cooler 23 and the like to a position where maintenance can be easily performed. For example, the oil cooler 23 and the like can be slid to the left of the intercooler 25.

When performing maintenance of the radiator 22 and the intercooler 25 fixed to the vehicle body, the worker can slide the oil cooler 23 and the condenser 24 so as not to interfere with the maintenance. As described above, by sliding the oil cooler 23 and the condenser 24, which are a plurality of cooling devices continuously disposed in the front-rear direction in front of the radiator 22, a work space for maintenance of the radiator 22 and the like can be secured.

Therefore, even if the radiator 22, the oil cooler 23, the condenser 24, and the intercooler 25 are disposed in the front-rear direction, it is possible to suppress the difficulty in maintenance of the radiator 22, the oil cooler 23, and the like. Further, by disposing the radiator 22 and the like close to the front and the rear, the overall length (front-rear length) of the hood 4 can be shortened. As a result, visibility in front of the tractor 1 can be improved, and the tractor 1 can be easily turned even in a relatively narrow place.

In the present embodiment, holding portions 23a and 24a are provided on the left and right outer surfaces (left side surface in Fig. 5) of the oil cooler 23 and the condenser 24. The holding portions 23a and 24a are formed in shapes that can be easily held by the worker. The oil cooler 23 and the like can be easily slid by the holding portions 23a and 24a. Note that, in the drawings other than Figs. 4 and 5, the description of the holding portions 23a and 24a is omitted.

Note that the configuration of the slide mechanism 30 illustrated in Figs. 5 and 6 is an example, and the oil cooler 23 and the condenser 24 can be slid by a configuration different from the configuration illustrated in Figs. 5 and 6. For example, in the example described above, the oil cooler 23 and the condenser 24 slide by the common upper rail 31, but it is also possible to dispose a rail on the upper side of the oil cooler 23 and the like and allow the oil cooler 23 and the like slide by different rails. It is also possible to slide the oil cooler 23 and the like in the vertical direction by disposing rails on the left and right outer sides of the oil cooler 23 and the like.

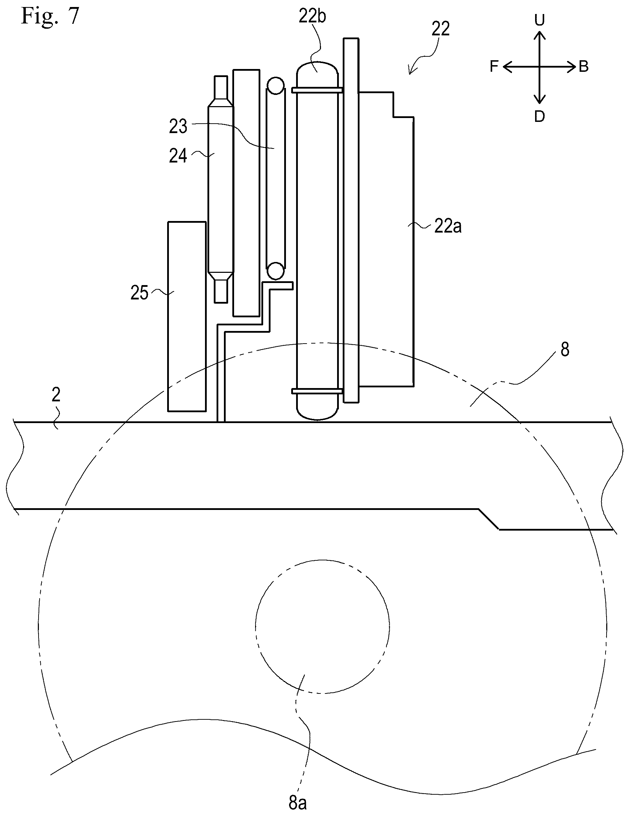

Fig. 7 is a side view illustrating a positional relationship between the front wheels 8 and the radiator 22, the oil cooler 23, the condenser 24, and the intercooler 25. Hereinafter, the positional relationship between the radiator 22 and the like and the front wheels 8 will be described with reference to Fig. 7.

The radiator 22 is disposed above an axle 8a of the front wheels 8 (axle provided at both left and right ends of the front axle mechanism) in a side view. A front-rear position (position in the front-rear direction) of the radiator 22 overlaps a front-rear position of the axle 8a. In the present embodiment, the front-rear position of the radiator 22 overlaps the front-rear position of the axial center of the axle 8a. By disposing the front-rear position of the radiator 22 so as to overlap the front-rear position of the axle 8a in this manner, it is possible to make it difficult for the front wheels 8 to approach the radiator 22 (to suppress interference) even if the turning angle of the front wheels 8 is increased.

The oil cooler 23 and the condenser 24 are disposed at positions higher than the front wheels 8. More specifically, the lower end of the oil cooler 23 and the like is disposed above an outer peripheral surface of the front wheels 8 in side view. In this manner, the oil cooler 23 and the condenser 24 of the present embodiment are disposed outside the front wheels 8 in side view. With this configuration, even if the turning angle of the front wheels 8 is increased, the front wheels 8 can be prevented from interfering with the oil cooler 23 and the like. Further, when the oil cooler 23 or the like is slid in the left-right direction, it is possible to make the front wheels 8 less likely to interfere (can be easily slid).

As described above, the lower end of the intercooler 25 is disposed at a position lower than the lower ends of the oil cooler 23 and the condenser 24. The lower end of the intercooler 25 is disposed between the pair of left and right front wheels 8. In this manner, at least a part of the intercooler 25 of the present embodiment is disposed so as to overlap the front wheel 8 in side view. With this configuration, the space between the left and right front wheels 8 can be effectively utilized. Further, since the left-right width W25 of the intercooler 25 is relatively small (see Fig. 4), the interference of the front wheels 8 with the intercooler 25 can be suppressed even if the turning angle of the front wheels 8 is increased.

Note that the positional relationship between the radiator 22 and the like and the front wheels 8 described above is an example, and can be appropriately changed according to the size, arrangement, and the like of the radiator 22 and the like.

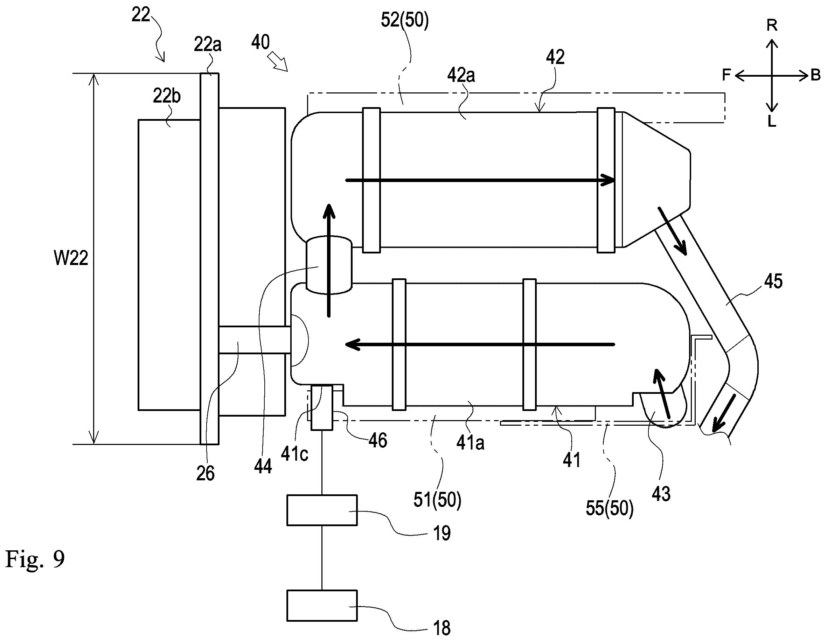

Hereinafter, the exhaust gas purification device 40 will be described with reference to Figs. 3, 8 to 10C, 13A and 13B, and 14. As illustrated in Figs. 3 and 8, the exhaust gas purification device 40 is disposed behind the radiator 22 and above the engine 3. As illustrated in Fig. 9, the exhaust gas purification device 40 includes a DPF 41, an SCR 42, an inlet pipe 43, a coupling pipe 44, an exhaust pipe 45, and a urea solution supply unit 46.

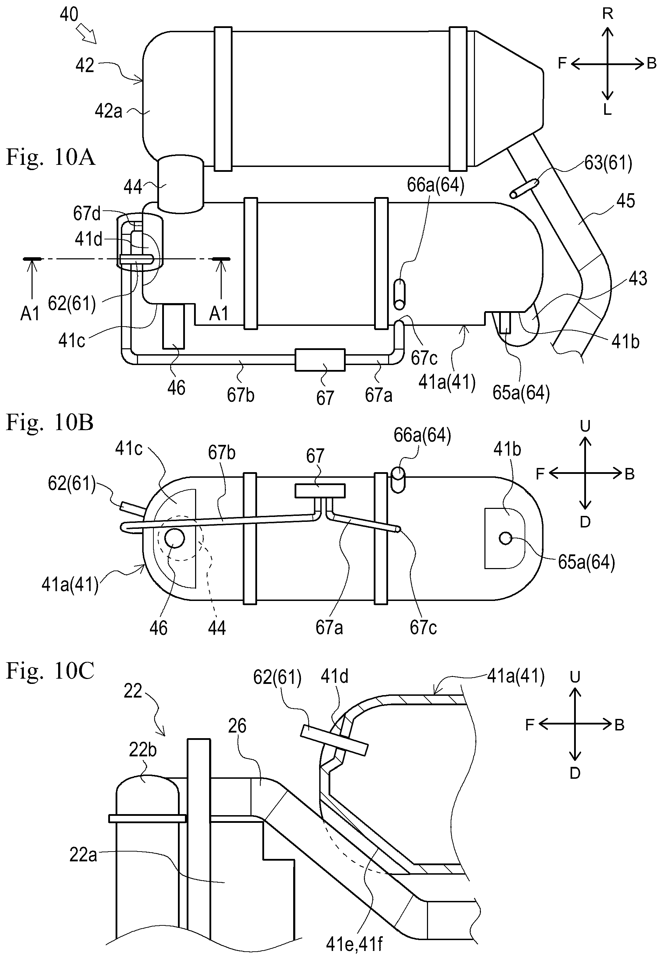

The diesel particulate filter (DPF) 41 collects particulate matter (PM) in exhaust gas discharged from the engine 3. The DPF 41 has a DPF case 41a formed in a hollow substantially columnar shape. In the DPF case 41a, a filter (not illustrated) or the like for collecting PM is provided. The DPF case 41a is disposed with the longitudinal direction thereof oriented in the front-rear direction. As illustrated in Fig. 10, a first left side recess 41b, a second left side recess 41c, an upper recess 41d, and a lower recess 41e are formed in the DPF case 41a. Note that Fig. 10C is a cross-sectional view taken along line A1-A1 in Fig. 10A, but the radiator 22 and the radiator connection pipe 26 are also illustrated for convenience of description.

The first left side recess 41b illustrated in Fig. 10A is formed at a left rear end of the DPF case 41a. The second left side recess 41c is formed at a left front end of the DPF case 41a. The first left side recess 41b and the second left side recess 41c are formed in a shape in which an outer peripheral surface of the DPF case 41a is recessed inward in the left-right direction (rightward).

The upper recess 41d illustrated in Fig. 10C is formed at a front upper end of the DPF case 41a. The upper recess 41d is formed in a shape in which the front upper end of the DPF case 41a is recessed rearward. The lower recess 41e illustrated in Fig. 10C is formed at a front lower end of the DPF case 41a (below the upper recess 41d). The lower recess 41e is formed in a shape in which the front lower end of the DPF case 41a is recessed rearward and upward. An inclined surface 41f inclined backward and downward (facing forward and downward) is formed in the lower recess 41e.

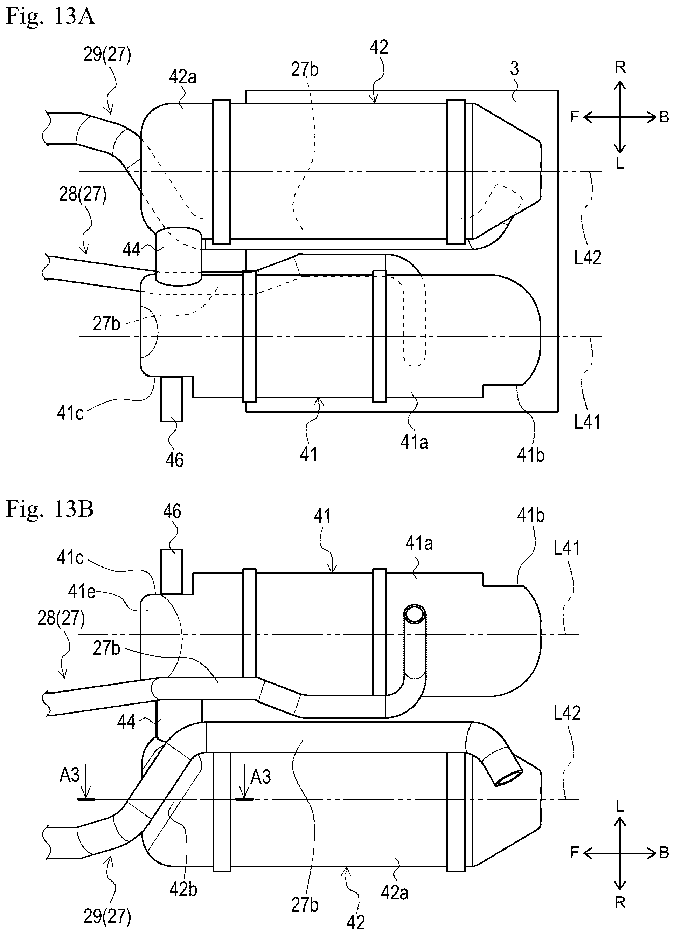

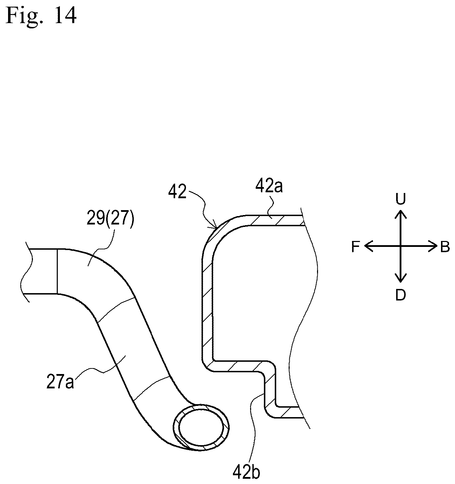

A selective catalytic reduction (SCR) 42 illustrated in Fig. 10A purifies nitrogen oxides in the exhaust gas. The SCR 42 includes an SCR case 42a formed in a substantially cylindrical hollow shape. A catalyst (not illustrated) or the like for purifying nitrogen oxide is provided in the SCR case 42a. The SCR case 42a is disposed with the longitudinal direction thereof oriented in the front-rear direction. As illustrated in Figs. 13A, 13B, and 14, the SCR case 42a includes a recess 42b.

The recess 42b is formed at a front lower end of the SCR case 42a. The recess 42b is formed in a shape in which the front lower end of the SCR case 42a is recessed upward.

As described above, the DPF case 41a and the SCR case 42a are disposed with the longitudinal direction thereof oriented in the front-rear direction (see Fig. 9). As a result, a left-right space necessary for installing the DPF case 41a and the SCR case 42a can be made relatively small (space saving can be achieved). Further, the left-right widths of the hood 4 can be reduced as the left-right space is reduced. As a result, the positions of the work device attached to the front portion of the tractor 1 and the front wheels 8 can be easily confirmed (visibility can be improved).

Further, as illustrated in Fig. 9, the SCR case 42a is disposed on the right side of the DPF case 41a (so as to overlap in side view). In this manner, the DPF case 41a and the SCR case 42a of the present embodiment are disposed side by side in the left-right direction. As a result, it is possible to align height positions of the DPF case 41a and the SCR case 42a and reduce a vertical space necessary for installing the DPF case 41a and the SCR case 42a (achieve space saving). Further, as the vertical space is reduced, the height of the hood 4 can be lowered to improve the visibility of the worker (driver) from the operator's seat 14.

The exhaust gas purification device 40 is disposed so as to fit within the left-right width W22 of the fan shroud 22a of the radiator 22. More specifically, in the exhaust gas purification device 40, the devices (the DPF 41 and the SCR 42) that purify the exhaust gas are disposed so as to fit within the left-right width W22. In the present embodiment, the exhaust gas purification device 40 is disposed so that a left end of the DPF 41a is located further to the right (toward the inner side of the vehicle body in the left-right direction) than a left end of the fan shroud 22a and a right end of the SCR case 42a is located further to the left (toward the inner side of the vehicle body in the left-right direction) than a right end of the fan shroud 22a.

In this manner, by fitting the exhaust gas purification device 40 within the left-right width W22 of the fan shroud 22a, it is possible to reduce the left-right space necessary for installing the exhaust gas purification device 40 (DPF case 41a and the like).

Note that the arrangement of the DPF case 41a and the SCR case 42a in the present embodiment is an example, and can be changed as appropriate. For example, although the SCR case 42a is disposed on the right side of the DPF case 41a, the left-right positional relationship between the DPF case 41a and the SCR case 42a may be interchanged. Although the DPF case 41a and the like are disposed with the longitudinal direction thereof oriented in the front-rear direction, the direction of the DPF case 41a and the like in the longitudinal direction is not particularly limited. For example, the DPF case 41a and the like may be disposed with the longitudinal direction thereof oriented in a direction inclined with respect to the front-rear direction.

The inlet pipe 43 guides the exhaust gas to the DPF case 41a. The inlet pipe 43 is connected to a bottom portion (rear lower end) of the DPF case 41a and the supercharger 21 (see Fig. 3). Note that the inlet pipe 43 is not necessarily connected to the bottom portion of the DPF case 41a, and may be connected to another portion of the DPF case 41a. For example, the inlet pipe 43 may be connected to a side portion of the DPF case 41a.

The coupling pipe 44 couples the DPF case 41a and the SCR case 42a to each other. The coupling pipe 44 is connected to the front end of the DPF case 41a and the front end of the SCR case 42a, and can guide the exhaust gas from the DPF case 41a to the SCR case 42a. The coupling pipe 44 is disposed with the longitudinal direction thereof oriented in the left-right direction. Further, the coupling pipe 44 is coupled to substantially upper and lower central portions of the DPF case 41a and the SCR case 42a having a substantially columnar shape and disposed side by side, and overlaps the DPF case 41a and the SCR case 42a in side view (see Fig. 10B).

Thus, in the present embodiment, the DPF case 41a and the SCR case 42a are connected at the shortest distance, and the length of the coupling pipe 44 is shortened. As a result, it is possible to reduce the space necessary for disposing the coupling pipe 44 and achieve space saving. Further, it is possible to prevent the coupling pipe 44 from protruding upward or downward from the DPF case 41a and the SCR case 42a, and to secure spaces above and below the DPF case 41a, the coupling pipe 44, and the like.

The exhaust pipe 45 discharges the exhaust gas purified by the exhaust gas purification device 40 toward the external space. A right end of the exhaust pipe 45 is connected to a left side portion (left rear end) of the SCR case 42a. The exhaust pipe 45 extends leftward from the SCR case 42a and is exposed to the outside of the hood 4 (see Fig. 1). In the present embodiment, the exhaust gas can be discharged from the left side of the vehicle body toward the external space of the tractor 1 through the exhaust pipe 45. Note that the configuration of the exhaust pipe 45 described above (the connecting portion with the SCR case 42a, the extending direction, and the like) is an example, and can be changed as appropriate. For example, the exhaust pipe 45 may be connected to a right side portion of the SCR case 42a and extend rightward. In addition, the exhaust pipe 45 may be connected to a bottom portion of the SCR case 42a, for example, and may extend downward.

As in the present embodiment, by discharging the exhaust gas from the left side of the vehicle body through the exhaust pipe 45, the exhaust pipe 45 does not interfere when the right side of the tractor 1 is visually recognized, so that it is possible to secure the field of view of the right side of the tractor 1. In addition, since a relatively large number of operation tools such as a main shift lever are disposed on the right portion of the tractor 1 (cabin 12), the worker often drives while watching the right side of the tractor 1. In the present embodiment, since the field of view on the right side of the tractor 1 is secured, the tractor 1 can be easily driven.

The urea solution supply unit 46 illustrated in Figs. 8 and 9 supplies urea solution into the DPF case 41a. The urea solution supply unit 46 includes a nozzle or the like for injecting urea solution (not illustrated). The urea solution supply unit 46 is attached to the left front end of the DPF case 41a. In the present embodiment, the urea solution supply unit 46 is attached to the second left side recess 41c of the DPF case 41a. By disposing the urea solution supply unit 46 using the recess (second left side recess 41c) of the DPF case 41a in this manner, a protruding width of the urea solution supply unit 46 from the outer peripheral surface of the DPF case 41a can be reduced, so that space saving can be achieved.

As illustrated in Fig. 9, the urea solution supply unit 46 is connected to the urea solution tank 18. The urea solution pump 19 is provided in a flow path of urea solution from the urea solution tank 18 to the urea solution supply unit 46. When the urea solution pump 19 is driven, the urea solution in the urea solution tank 18 is pumped (supplied) to the urea solution supply unit 46. The urea solution is supplied into the DPF case 41a through the urea solution supply unit 46.

Hereinafter, a flow path of the exhaust gas in the exhaust gas purification device 40 and a procedure of purification of the exhaust gas will be described with reference to Fig. 9. Note that an arrow illustrated in Fig. 9 indicates a flowing direction of the exhaust gas.

The exhaust gas flows from the supercharger 21 to a rear end of the DPF case 41a through the inlet pipe 43. The exhaust gas flows forward in the DPF case 41a. At this time, PM in the exhaust gas is collected by the DPF case 41a (filter). The urea solution is injected to the exhaust gas flowing to the front end of the DPF case 41a by the urea solution supply unit 46. The urea solution is hydrolyzed in the DPF case 41a to produce ammonia.

The exhaust gas and ammonia flow from the DPF case 41a to the coupling pipe 44, and flow rightward through the coupling pipe 44. At this time, the exhaust gas and ammonia are mixed. The exhaust gas or the like flows into the front end of the SCR case 42a from the coupling pipe 44.

The exhaust gas or the like flows rearward in the SCR case 42a. At this time, nitrogen oxide and ammonia in the exhaust gas chemically react on the catalyst in the SCR case 42a, and the nitrogen oxide is reduced to nitrogen and water (the nitrogen oxide is purified in the SCR case 42a). In this manner, the exhaust gas is purified by the exhaust gas purification device 40. The exhaust gas flowing through the SCR case 42a to the rear end is discharged to the external space through the exhaust pipe 45.

As described above, in the present embodiment, the flow path of the exhaust gas is formed so that the exhaust gas flowing into the DPF case 41a is turned back only once in the front-rear direction and then flows out from the SCR case 42a. This makes it possible to simplify the flow path of the exhaust gas. Note that the flow path of the exhaust gas in the present embodiment is an example, and can be appropriately changed according to the direction of the DPF case 41a and the like.

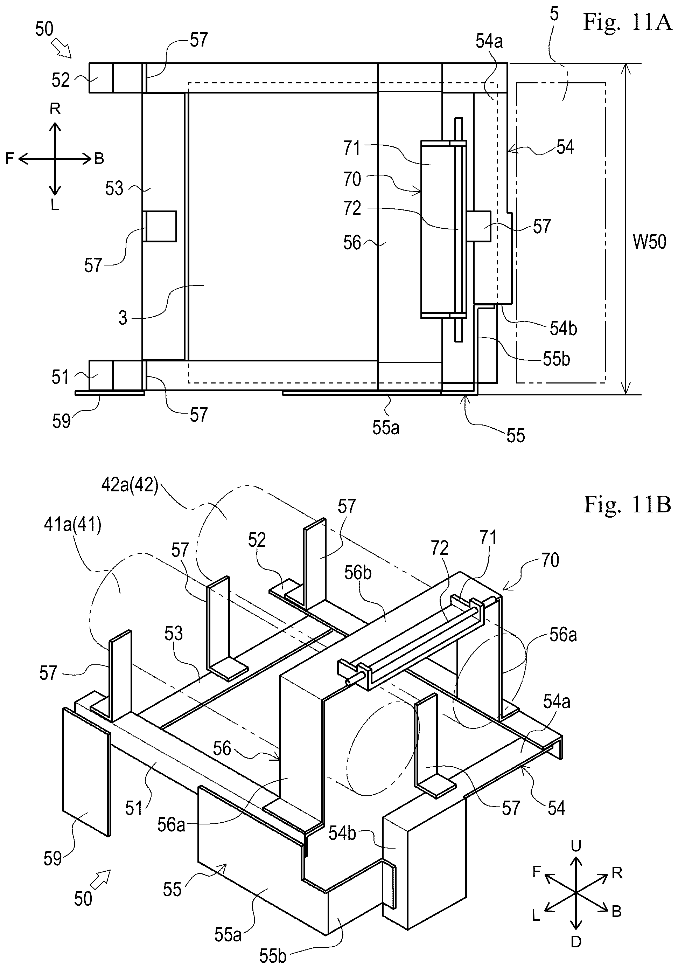

Hereinafter, the support member 50 that supports the exhaust gas purification device 40 (the DPF case 41a, the SCR case 42a, and the like) will be described with reference to Figs. 8, 11A, and 11B.

The support member 50 is configured by appropriately combining a plurality of plate-shaped members. The support member 50 is formed in a frame shape. As illustrated in Figs. 11A and 11B, the support member 50 includes a left side member 51, a right side member 52, a front side member 53, a rear side member 54, a heat shielding plate 55, an outer member 56, a case support member 57, a sensor support member 58, and a connector fixing member 59.

The left side member 51 is a member forming a left portion of the support member 50. The right side member 52 is a member forming a right portion of the support member 50. The right side member 52 is disposed on the right side of the left side member 51. The left side member 51 and the right side member 52 are formed in an elongated shape extending in the front-rear direction. In the present embodiment, a front-back width of the right side member 52 is longer than a front-back width of the left side member 51. Further, a rear end of the right side member 52 is positioned behind a rear end of the left side member 51 (see Figs. 11A and 11B).

The front side member 53 is a member forming a front portion of the support member 50. The front side member 53 is formed in an elongated shape extending in the left-right direction. Both left and right ends of the front side member 53 are fixed to front portions of the left side member 51 and the right side member 52.

The rear side member 54 is a member forming a rear portion of the support member 50. The rear side member 54 has a first extending portion 54a extending in the left-right direction and a second extending portion 54b extending downward from a left end of the first extending portion 54a. A right end of the first extending portion 54a is fixed to a rear end of the right side member 52. The second extending portion 54b is coupled to the left side member 51 through the heat shielding plate 55.

The heat shielding plate 55 illustrated in Figs. 8, 11A, and 11B is a plate-shaped member that covers the supercharger 21. The heat shielding plate 55 has a plate-shaped portion 55a and an extending portion 55b. The plate-shaped portion 55a is a plate-shaped portion having a plate surface facing the left-right direction. The plate-shaped portion 55a is fixed to the left side member 51 and is disposed so as to protrude downward from the left side member 51.

The extending portion 55b is a portion extending from a rear end of the plate-shaped portion 55a toward the rear side member 54 (rightward). The extending portion 55b is fixed to the second extending portion 54b of the rear side member 54. In this manner, the support member 50 is formed in a substantially rectangular annular shape (frame shape) in plan view by the left side member 51, the right side member 52, the front side member 53, the rear side member 54, and the heat shielding plate 55.

The outer member 56 is a member that surrounds the left and right outer sides and the upper side of the exhaust gas purification device 40 (the DPF case 41a and the SCR case 42a). As illustrated in Fig. 11A, the outer member 56 is disposed between the front side member 53 and the rear side member 54 in the front-rear direction. As illustrated in Fig. 11B, the outer member 56 is formed in an inverted U shape in front view with the opening facing downward. The outer member 56 includes a first longitudinal portion 56a and a second longitudinal portion 56b.

The first longitudinal portion 56a is formed in an elongated shape whose longitudinal direction is oriented in the vertical direction. A pair of left and right first longitudinal portions 56a is formed. The left and right first longitudinal portions 56a are fixed to the left side member 51 and the right side member 52, and are disposed so as to protrude upward from the left side member 51 and the right side member 52. The second longitudinal portion 56b is formed in an elongated shape whose longitudinal direction is oriented in the left-right direction. The second longitudinal portion 56b is formed so as to connect upper ends of the left and right first longitudinal portions 56a. The second longitudinal portion 56b is provided with a fulcrum portion 70 serving as a rotation fulcrum of the hood 4. Note that the fulcrum portion 70 will be described later.

The case support member 57 supports the DPF case 41a and the SCR case 42a. The case support member 57 is formed in a plate shape, and is fixed to each of the left side member 51, the right side member 52, the front side member 53, and the rear side member 54. Further, the case support member 57 is disposed so as to protrude upward from the left side member 51 and the like.

The sensor support member 58 illustrated in Fig. 8 supports a temperature sensor 64 to be described later. The sensor support member 58 is formed in a plate shape with a plate surface facing the left-right direction. The sensor support member 58 is attached to the case support member 57 fixed to the left side member 51 and the outer member 56, and is disposed on the left side of the DPF case 41a. Note that, in Figs. 11A and 11B, the description of the sensor support member 58 is omitted for convenience of description.

The support member 50 of the present embodiment is fixed to the engine 3. More specifically, the left side member 51 is fixed to an upper portion of the left side surface of the engine 3. Further, the right side member 52 illustrated in Figs. 11A and 11B is fixed to an upper portion of a right side surface of the engine 3. Furthermore, the front side member 53 is fixed to an upper portion of a front side surface of the engine 3. Further, the rear side member 54 is fixed to an upper portion of the rear side surface of the engine 3.

Thus, the support member 50 is formed in a frame shape surrounding the upper portion of the engine 3 from the outside in the horizontal direction. The support member 50 is disposed at a position lower than an upper end of the head cover 3a of the engine 3 illustrated in Fig. 8. More specifically, the upper ends of various members forming the frame (the left side member 51, the right side member 52, and the like) of the support member 50 are disposed at positions lower than an upper end of the head cover 3a. As a result, the support member 50 can be disposed close to the engine 3 in the vertical direction (the height position of the support member 50 can be lowered). Therefore, space saving can be achieved. In addition, the height of the hood 4 can be lowered by lowering the height position of the exhaust gas purification device 40 as the support member 50 is disposed in a vertically compact manner with respect to the engine 3.

Further, the plate-shaped portion 55a of the heat shielding plate 55 is disposed on the left side of the supercharger 21. In this manner, the supercharger 21 is covered from the left and right outer sides by the plate-shaped portion 55a. As a result, the heat of the supercharger 21 can be suppressed from being transferred to other members.

Further, the left side member 51 overlaps a part of the breather pipe 3d connected to the head cover 3a in side view. By disposing the left side member 51 and the breather pipe 3d at positions relatively close to each other in this manner, the heat transferred from the engine 3 to the left side member 51 can be easily transferred to the breather pipe 3d. Therefore, freezing of the breather pipe 3d can be suppressed.

Note that the positional relationship between the left side member 51 and the breather pipe 3d described above is an example, and can be changed as appropriate. For example, the breather pipe 3d may be disposed above (or below) the left side member 51.

In the present embodiment, the rear side member 54 located at the rearmost position in the support member 50 is disposed in front of the rear surface of the flywheel housing 5. By disposing the support member 50 in front of the rear surface of the flywheel housing 5 in this manner, it is possible to dispose the support member 50 relatively in front and to secure a space behind the support member 50. By effectively utilizing the space, a space (for example, a foot space) in the cabin 12 located behind the support member 50 can be secured.

The DPF case 41a and the SCR case 42a described above are fixed to the case support member 57 of the support member 50. In the present embodiment, as illustrated in Figs. 8 and 11B, the DPF case 41a and the like are fixed to the case support member 57 in a state where the rear portion thereof is disposed inside the outer member 56. In this manner, the DPF case 41a and the like are supported by the support member 50 on the upper side of the engine 3. Further, the outer member 56 is disposed so as to surround the left and right outer sides and the upper side of the DPF case 41a and the like.

As illustrated in Fig. 8, the DPF case 41a and the SCR case 42a are disposed in front of the rear surface of the flywheel housing 5. As a result, the DPF case 41a and the like can be disposed relatively in front, and a space can be secured behind the DPF case 41a and the like.

As illustrated in Figs. 8 and 11B, the connector fixing member 59 is attached to the support member 50 of the present embodiment. The connector fixing member 59 is fixed with a connector 61a that connects a sensor (a nitrogen oxide sensor 61 in the present embodiment) and another device. The connector fixing member 59 is formed in a plate shape with a plate surface facing the left-right direction. Further, the connector fixing member 59 is formed in a rectangular shape in a side view with the longitudinal direction oriented in the vertical direction.

The connector fixing member 59 is coupled to the left side member 51. Thus, the support member 50 is configured to support the connector 61a through the connector fixing member 59. Note that a reference sign P59 illustrated in Fig. 8 indicates a coupling portion (for example, a portion to which a bolt or the like is attached) between the left side member 51 and the connector fixing member 59. The connector 61a is disposed at a position lower than the coupling portion P59. As a result, the thermal influence on the connector 61a can be alleviated.

More specifically, since the heat generated in the engine 3 and the like rises, a higher position in the hood 4 is likely to have a higher temperature. In the present embodiment, by disposing the connector 61a at a position lower than the coupling portion P59 (a position where the temperature is low), it is possible to suppress the connector 61a from becoming high temperature (to alleviate the influence of heat).

Further, as illustrated in Fig. 8, in the present embodiment, the opening 4a is formed in an upper surface of the hood 4, and heat can be discharged from the inside of the hood 4 to the external space through the opening 4a. As a result, the temperature in the hood 4 can be lowered, and the thermal influence on the connector 61a can be alleviated. Although the opening 4a formed on the upper side of the supercharger 21 is illustrated in Fig. 8 as an example, the portion where the opening 4a is formed is not limited to the upper side of the supercharger 21. For example, the opening 4a may be provided at an appropriate position on the upper surface of the hood 4.

It is also possible to provide the opening 4a on a side surface (other than the upper surface) of the hood 4. Further, the opening 4a may be provided on both the side surface and the upper surface of the hood 4. Even in a case where the opening 4a is provided on the side surface of the hood 4, the temperature in the hood 4 can be lowered, so that electrical components (a differential pressure sensor 67 and the like to be described later) can be protected from heat of the engine 3 and the like.

Here, the DPF case 41a, the support member 50, and the like described above are attached with sensors that acquire various types of information necessary for control (for example, control of the supply amount of urea solution or the like) when purifying the exhaust gas. Hereinafter, the sensor will be described. Specifically, the nitrogen oxide sensor 61, the temperature sensor 64, and the differential pressure sensor 67 will be described.

The nitrogen oxide sensor 61 illustrated in Figs. 8 and 10 detects the concentration of nitrogen oxide in the exhaust gas. The nitrogen oxide sensor 61 is formed in a rod shape. The nitrogen oxide sensor 61 is connected to the connector 61a through the cable 61b illustrated in Fig. 8, and is configured to output a detection result of the nitrogen oxide concentration to an external device. The nitrogen oxide sensor 61 is installed at two places in the flow path of the exhaust gas. Hereinafter, of the two nitrogen oxide sensors 61, the nitrogen oxide sensor 61 on the upstream side is referred to as a "first nitrogen oxide sensor 62", and the nitrogen oxide sensor 61 on the downstream side is referred to as a "second nitrogen oxide sensor 63".

As illustrated in Fig. 10C, the first nitrogen oxide sensor 62 is attached to the upper recess 41d formed at the front end of the DPF case 41a. By disposing the first nitrogen oxide sensor 62 by using the recess (upper recess 41d) of the DPF case 41a in this manner, the protrusion width of the first nitrogen oxide sensor 62 from the outer peripheral surface of the DPF 41 can be reduced, so that space saving can be achieved.

As illustrated in Fig. 10A, the second nitrogen oxide sensor 63 is attached to the exhaust pipe 45. Further, the second nitrogen oxide sensor 63 is disposed so as to protrude from the exhaust pipe 45 toward the DPF case 41a in plan view. As a result, since the second nitrogen oxide sensor 63 can be disposed using the space between the DPF 41 and the exhaust pipe 45, space saving can be achieved.

The temperature sensor 64 illustrated in Figs. 8, 10A, and 10B detects the temperature of the exhaust gas. The temperature sensors 64 are installed at two locations in the flow path of the exhaust gas. Hereinafter, the temperature sensor 64 on the upstream side is referred to as a "first temperature sensor 65", and the temperature sensor 64 on the downstream side is referred to as a "second temperature sensor 66".

The first temperature sensor (sensor unit) 65 includes a sensor unit 65a and a connector unit 65b. The sensor unit 65a senses temperature. The sensor unit 65a is formed in a rod shape. The sensor unit 65a is attached to the first left side recess 41b of the DPF case 41a. As a result, the protruding width of the sensor unit 65a from the outer peripheral surface of the DPF 41 can be reduced, so that space saving can be achieved.

The connector unit 65b illustrated in Fig. 8 connects the ECU that controls the operation of the tractor 1 and the sensor unit 65a. The connector unit 65b is fixed to the sensor support member 58.

The second temperature sensor (sensor unit) 66 includes a sensor unit 66a and a connector unit 66b. The sensor unit 66a is attached to the outer peripheral surface of the DPF case 41a. The sensor unit 66a is disposed in front of the sensor unit 65a of the first temperature sensor 65. The connector unit 66b is fixed to the sensor support member 58. Thus, in the present embodiment, the exhaust gas purification device 40 and the temperature sensor 64 (connector unit 65b) are configured to be supported by a common member (support member 50).

The differential pressure sensor 67 detects a differential pressure of the exhaust gas between two points in the flow path of the exhaust gas. The differential pressure sensor 67 is fixed to a front-rear middle portion of the DPF case 41a through a predetermined member. The first connection pipe 67a and the second connection pipe 67b are connected to the differential pressure sensor 67.

As illustrated in Figs. 10A and 10B, a rear end of the first connection pipe 67a is attached to the rear portion of the DPF case 41a (behind the differential pressure sensor 67). The front end of the first connection pipe 67a is attached to the differential pressure sensor 67. The first connection pipe 67a can guide the exhaust gas from the rear end of the DPF case 41a to the differential pressure sensor 67. Hereinafter, the attachment portion of the first connection pipe 67a to the DPF case 41a is referred to as a "first portion 67c". The first connection pipe 67a is disposed so as to extend downward (incline backward and downward) from the differential pressure sensor 67 toward the first portion 67c.

The front end of the second connection pipe 67b is attached to the front end of the DPF case 41a (before the differential pressure sensor 67). A rear end of the second connection pipe 67b is attached to the differential pressure sensor 67. The second connection pipe 67b can guide the exhaust gas from the front end of the DPF case 41a to the differential pressure sensor 67. Hereinafter, the attachment portion of the second connection pipe 67b to the DPF case 41a is referred to as a "second portion 67d".

As described above, the exhaust gas flows through the DPF case 41a forward (see Fig. 9). Therefore, the second portion 67d is located downstream of the first portion 67c in the flowing direction of the exhaust gas. The second connection pipe 67b is disposed so as to extend downward (incline forward and downward) from the differential pressure sensor 67 toward the second portion 67d.

The differential pressure sensor 67 detects a differential pressure between the first portion 67c and the second portion 67d by the exhaust gas from the first connection pipe 67a and the exhaust gas from the second connection pipe 67b. For example, the differential pressure sensor 67 includes a diaphragm that deforms according to the pressure of the exhaust gas from the first connection pipe 67a and the pressure of the exhaust gas from the second connection pipe 67b, and detects the differential pressure based on the degree of deformation of the diaphragm.

Here, since the first connection pipe 67a and the second connection pipe 67b guide the exhaust gas, moisture contained in the exhaust gas may be condensed (becomes condensed water) inside the first connection pipe 67a and the second connection pipe 67b. The first connection pipe 67a and the second connection pipe 67b of the present embodiment extend downward from the differential pressure sensor 67 toward the first portion 67c and the second portion 67d. With this configuration, since the condensed water of the exhaust gas can flow away from the differential pressure sensor 67, it is possible to prevent the condensed water from entering the differential pressure sensor 67 and causing a problem.

Further, the differential pressure sensor 67 is disposed between the first portion 67c and the second portion 67d in the front-rear direction. As a result, since the first connection pipe 67a and the second connection pipe 67b can be extended from the differential pressure sensor 67 in different directions (forward or backward), the first connection pipe 67a and the second connection pipe 67b can be easily disposed.

As described above, the temperature in the hood 4 tends to be higher at a higher position. Therefore, in the present embodiment, the differential pressure sensor 67 is disposed so as to overlap the DPF case 41a in side view (see Fig. 10B), and the height position of the differential pressure sensor 67 is suppressed from becoming higher than necessary. As a result, it is possible to suppress the differential pressure sensor 67 from becoming a high temperature and to alleviate the influence of heat on the differential pressure sensor 67.

Hereinafter, with reference to Figs. 3 and 12A to 14, a positional relationship between various members of the exhaust gas purification device 40 and members disposed around the members will be described. First, the positional relationship between the DPF case 41a and the SCR case 42a, and the cooler connection pipe 27 will be described.

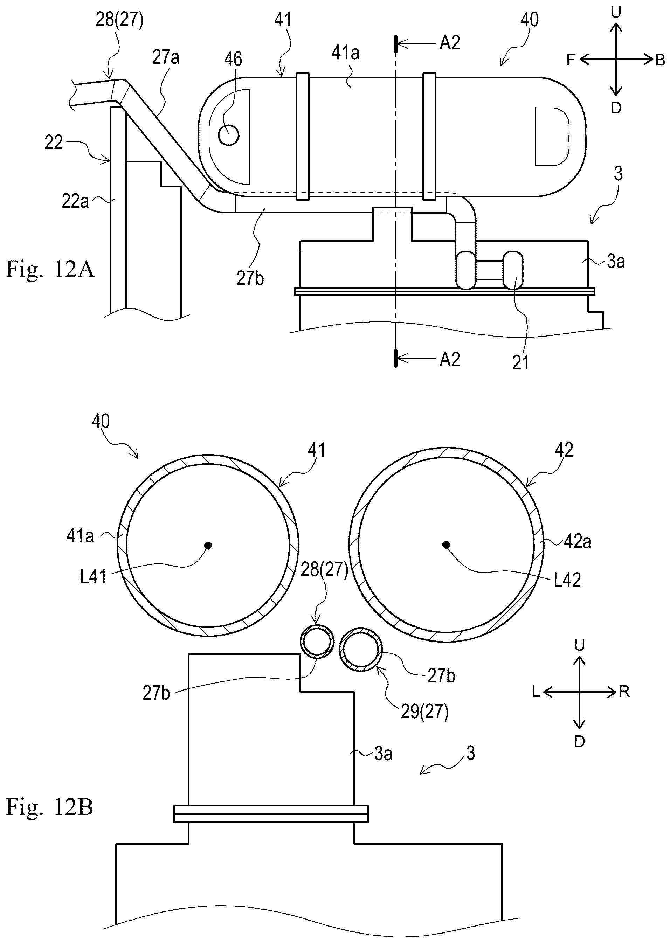

As described above, the cooler connection pipe 27 connects the engine 3, the supercharger 21, and the intercooler 25 (see Figs. 3 and 12A). Hereinafter, the cooler connection pipe 27 connecting the supercharger 21 and the intercooler 25 is referred to as a "first cooler pipe 28". Further, the cooler connection pipe 27 connecting the engine 3 and the intercooler 25 is referred to as a "second cooler pipe 29". As illustrated in Figs. 12B and 13B, the second cooler pipe 29 is disposed on the right side of the first cooler pipe 28. Note that since most of the second cooler pipe 29 overlaps the first cooler pipe 28 in a side view, the second cooler pipe 29 is not illustrated in Fig. 12A.

As illustrated in Fig. 3, in the present embodiment, the radiator 22, the oil cooler 23, and the condenser 24 are disposed between the intercooler 25 and the exhaust gas purification device 40. The two cooler connection pipes 27 are disposed so as to pass through the upper side of the condenser 24 and the like. Further, as illustrated in Fig. 12A, the two cooler connection pipes 27 extend rearward and downward in a side view above the fan shroud 22a of the radiator 22. Hereinafter, a portion of the two cooler connection pipes 27 extending rearward and downward is referred to as a "first extending portion 27a". The two cooler connection pipes 27 further extend rearward from the rear lower end of the first extending portion 27a in a side view, and are connected to the supercharger 21 or the engine 3. Hereinafter, a portion of the two cooler connection pipes 27 extending rearward is referred to as a "second extending portion 27b".

As illustrated in Fig. 12B, the second extending portion 27b is disposed so as to be shifted in position in the left-right direction with respect to an axis L41 of the DPF case 41a and an axis L42 of the SCR case 42a. Note that the axis L41 of the DPF case 41a is a straight line passing through the center of the DPF case 41a (circular cross section) and parallel to the longitudinal direction of the DPF case 41a in the cross section of the DPF case 41a viewed from the longitudinal direction. Further, the axis L42 of the SCR case 42a is a straight line passing through the center of the SCR case 42a (circular cross section) and parallel to the longitudinal direction of the SCR case 42a in the cross section of the SCR case 42a viewed in the longitudinal direction. The second extending portion 27b is disposed at a position where the top portion of the cross section viewed from the longitudinal direction is higher than the lower ends of the DPF case 41a and the SCR case 42a. Therefore, as illustrated in Fig. 12A, in the cooler connection pipe 27, the top of the second extending portion 27b and the periphery thereof overlap the DPF case 41a and the like in side view.

By disposing the DPF case 41a and the SCR case 42a (the exhaust gas purification device 40) and at least a part of the cooler connection pipe 27 so as to overlap each other in side view in this manner, the DPF case 41a and the like and the cooler connection pipe 27 can be disposed in a vertically compact manner (space saving can be achieved). Further, the height of the hood 4 can be lowered by lowering the height position of the DPF case 41a and the like as the DPF case 41a and the like and the cooler connection pipe 27 are disposed in a vertically compact manner.

Note that in the present embodiment, each of the DPF case 41a and the SCR case 42a and the two cooler connection pipes 27 overlap each other in a side view, but the cooler connection pipe 27 may be disposed so as to overlap any one of the DPF case 41a and the SCR case 42a. As described above, the cooler connection pipe 27 only needs to be disposed so as to overlap at least one device that purifies the exhaust gas in the exhaust gas purification device 40 in a side view.

Further, as illustrated in Fig. 12A, a front-rear middle portion of the second extending portions 27b of the two cooler connection pipes 27 overlaps the head cover 3a of the engine 3 in side view. More specifically, as illustrated in Fig. 12B, the second extending portion 27b (front-rear middle portion) is disposed at a position where a bottom portion of the cross section viewed from the longitudinal direction is lower than the upper end of the head cover 3a. Therefore, the bottom portion and the periphery thereof of the front-rear middle portion of the second extending portion 27b overlap the head cover 3a in side view. By disposing at least a part of the cooler connection pipe 27 and the engine 3 so as to overlap each other in a side view in this manner, the engine 3 and the cooler connection pipe 27 can be disposed in a vertically compact manner.

Further, as illustrated in Figs. 13A and 13B, the second extending portion 27b (an overlapping portion with the DPF case 41a and the like) is disposed between the axis L41 of the DPF case 41a and the axis L42 of the SCR case 42a in the left-right direction. As a result, the cooler connection pipe 27 can be disposed using the left-right space between the DPF case 41a and the SCR case 42a, so that space saving can be achieved.

Further, as illustrated in Fig. 13A, the second extending portion 27b (an overlapping portion with the DPF case 41a and the like), the DPF case 41a, and the SCR case 42a overlap the engine 3 in plan view. As a result, the DPF case 41a and the like and the engine 3 are disposed vertically, and the front-rear and left-right spaces necessary for installing the DPF case 41a and the like can be reduced, so that space saving can be achieved.

Further, the first cooler pipe 28 overlaps the DPF case 41a in plan view. The second cooler pipe 29 overlaps the SCR case 42a in plan view. As illustrated in Figs. 13B and 14, the second cooler pipe 29 is disposed so as to pass through the recess 42b formed at the front lower end of the SCR case 42a. With this configuration, since the installation space of the second cooler pipe 29 can be secured by the recess 42b (the second cooler pipe 29 can be disposed using the recess 42b), space saving can be achieved.

Next, a positional relationship between the DPF case 41a and the radiator connection pipe 26 will be described with reference to Fig. 10C.

As described above, the radiator connection pipe 26 connects the radiator 22 and the engine 3. The radiator connection pipe 26 extends rearward from the upper end and the lower end of the core 22b, and is connected to the engine 3. The radiator connection pipe 26 extending from the upper end of the core 22b extends rearward and downward on the upper side of the fan shroud 22a. The radiator connection pipe 26 is disposed so as to pass through the lower recess 41e formed at the front lower end of the DPF case 41a. With this configuration, the installation space of the radiator connection pipe 26 can be secured by the lower recess 41e, and space saving can be achieved.

Further, since the inclined surface 41f inclined backward and downward is formed in the lower recess 41e, air can be guided backward and downward along the inclined surface 41f. As a result, it is possible to improve the flow of air to the member on the rear lower side of the lower recess 41e. In the present embodiment, since the engine 3 is disposed below the DPF 41, it is possible to improve the flow of air to a predetermined portion (for example, an injector or the like) of the engine 3.

Note that in the present embodiment, the radiator connection pipe 26 is disposed so as to pass through the lower recess 41e, but the pipe passing through the lower recess 41e is not limited to the radiator connection pipe 26, and can be appropriately changed according to the arrangement of various devices in the engine room R. For example, the first cooler pipe 28 (see Figs. 13A and 13B) described above may be disposed so as to pass through the lower recess 41e.

Hereinafter, the fulcrum portion 70 serving as a rotation fulcrum of the hood 4 will be described with reference to Figs. 8, 11A, and 11B. The fulcrum portion 70 of the present embodiment rotatably supports the hood 4. As described above, the fulcrum portion 70 is provided on the second longitudinal portion 56b of the outer member 56. As illustrated in Figs. 11A and 11B, the fulcrum portion 70 includes a bracket 71 and a rotation shaft 72.

The bracket 71 is a member that supports the rotation shaft 72. As illustrated in Fig. 11B, the bracket 71 is formed in a shape in which both left and right ends of a plate-shaped member with a plate surface facing the vertical direction are bent upward. The bracket 71 is placed on an upper surface of the second longitudinal portion 56b and fixed to the second longitudinal portion 56b. In this manner, the fulcrum portion 70 and the exhaust gas purification device 40 are supported by a common member (support member 50).

The rotation shaft 72 is a shaft-shaped member that rotatably supports the hood 4. The rotation shaft 72 is disposed with the longitudinal direction thereof oriented in the left-right direction. The rotation shaft 72 is inserted into the bracket 71. The hood 4 is engaged with the rotation shaft 72 (see an engaging portion 4b of the hood 4 illustrated in Fig. 8). The hood 4 can rotate (pivot vertically) about the rotation shaft 72.

Here, as described above, the outer member 56 is disposed so as to surround the left and right outer sides and the upper side of the DPF case 41a and the SCR case 42a. In the outer member 56, the second longitudinal portion 56b is disposed on the upper side of the DPF case 41a and the like. By providing the fulcrum portion 70 on the upper surface of the second longitudinal portion 56b, the fulcrum portion 70 is disposed on the upper side of the DPF case 41a and the like with the second longitudinal portion 56b interposed therebetween (overlapping in plan view).

In this manner, in the present embodiment, the DPF case 41a and the SCR case 42a (the exhaust gas purification device 40) and the fulcrum portion 70 are disposed vertically, thereby reducing a front-rear space necessary for installing the DPF case 41a, the fulcrum portion 70, and the like. As a result, the overall length of the hood 4 can be shortened.

Note that in the present embodiment, the fulcrum portion 70 is disposed above both the DPF case 41a and the SCR case 42a, but the fulcrum portion 70 may be disposed above either the DPF case 41a or the SCR case 42a. As described above, the fulcrum portion 70 only needs to be disposed above at least one device that purifies the exhaust gas in the exhaust gas purification device 40.

Further, the outer member 56 surrounding the DPF case 41a and the like (in the present embodiment, having an inverted U shape in front view) is relatively hardly deformed in the direction in which the hood 4 is twisted. By providing the fulcrum portion 70 (rotation shaft 72) on the outer member 56, the torsional strength of the hood 4 can be improved. Note that the directions in which the hood 4 is twisted are a clockwise direction and a counterclockwise direction in a front view.

As illustrated in Fig. 11A, a right end of the rotation shaft 72 is located further to the left (toward the inner side of the vehicle body in the left-right direction) than a right end of the right side member 52. Moreover, a left end of the rotation shaft 72 is located further to the right (toward the inner side of the vehicle body in the left-right direction) than a left side surface of the heat shielding plate 55. By fitting the rotation shaft 72 within a left-right width W50 of the support member 50 in this manner, it is possible to relatively reduce the left-right space necessary for installing the rotation shaft 72. The hood 4 thus has a reduced left-right width.

Note that the left-right width W50 of the support member 50 is a width along the left-right direction from a left end to a right end of various members (the left side member 51, the right side member 52, and the like) forming the frame in the support member 50. In the present embodiment, the width is a width along the left-right direction from the right end of the right side member 52 to the left side surface of the heat shielding plate 55 (plate-shaped portion 55a).

As is apparent from Fig. 9, the coupling pipe 44 is also disposed so as to fit within the left-right width W50 of the support member 50. That is, a right end of the coupling pipe 44 is located further toward the inner side of the vehicle body in the left-right direction than a left end of the right side member 52, and a left end of the coupling pipe 44 is located further toward the inner side of the vehicle body in the left-right direction than the left side surface of the heat shielding plate 55. By fitting the coupling pipe 44 within the left-right width W50 in this manner, it is possible to relatively reduce the left-right space necessary for installing the support member 50 and the coupling pipe 44. The hood 4 thus has a reduced left-right width.

Note that the above-described configuration of the fulcrum portion 70 is an example, and can be changed as appropriate. For example, although the fulcrum portion 70 of the present embodiment includes the bracket 71 and the rotation shaft 72, the hood 4 may be rotatably supported by other components. Although the rotation shaft 72 is disposed so as to fit within the left-right width W50 of the support member 50 (see Fig. 11A), it is not limited thereto, and at least one of both the left and right ends of the rotation shaft 72 may be disposed so as to protrude to the left and right with respect to the support member 50 in plan view. Although the fulcrum portion 70 is supported by the outer member 56, it may be supported by other members.

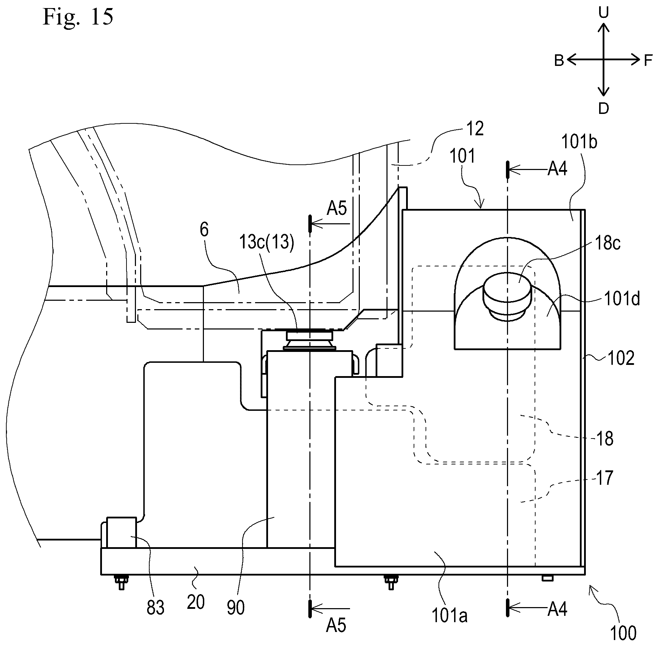

Hereinafter, various members disposed in the lower right portion of the cabin 12 will be described with reference to Figs. 15 to 19B. Specifically, the fuel tank 17, the urea solution tank 18, and the urea solution pump 19 will be described. Further, a tank fixing structure 80 for fixing the fuel tank 17 and the urea solution tank 18 will also be described.

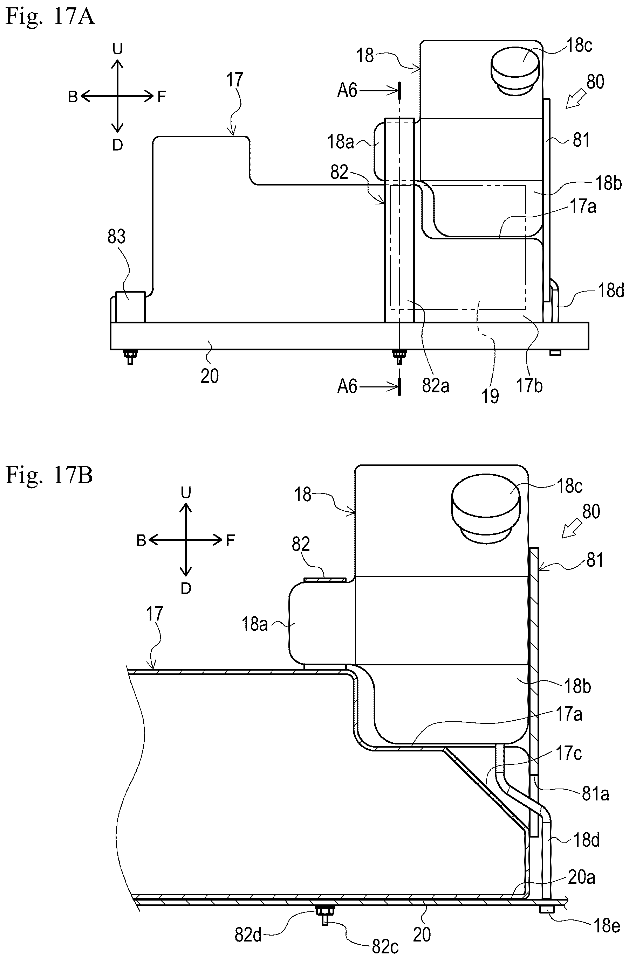

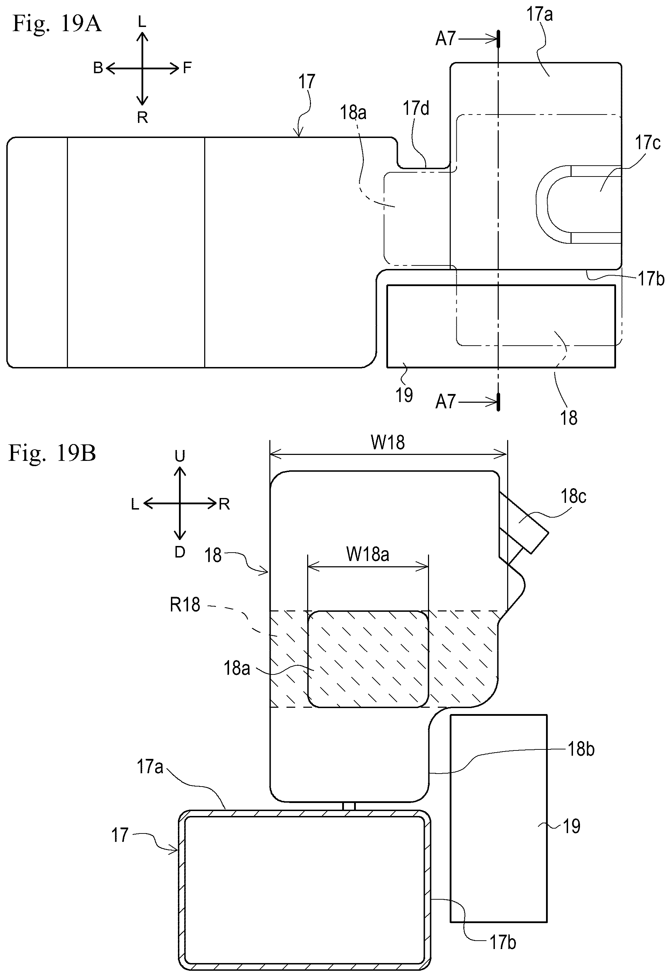

The fuel tank 17 is formed in a hollow shape and is connected to the engine 3 (see Fig. 3) through a hose or the like. As illustrated in Figs. 17A, 17B, 19A, and 19B, the fuel tank 17 includes a tank housing recess 17a, a pump housing recess 17b, a pipe housing recess 17c, and a band attachment recess 17d.

The tank housing recess 17a illustrated in Figs. 17A and 17B is a recess for housing the lower portion of the urea solution tank 18. The tank housing recess 17a is formed at a front end of the fuel tank 17. The tank housing recess 17a is formed in a shape in which an upper surface of the fuel tank 17 is recessed downward. The fuel tank 17 is formed in a shape in which a rear portion bulges upward with respect to the front end by forming the tank housing recess 17a.

The pump housing recess 17b illustrated in Figs. 19A and 19B is a recess for housing the lower portion of the urea solution pump 19. The pump housing recess 17b is formed in a shape in which a right side surface (side surface facing the outer side in the left-right direction) of the fuel tank 17 is recessed leftward (toward the inner side in the left-right direction). The pump housing recess 17b is formed from the front end to a front-rear middle portion of the fuel tank 17. A front-back width of the pump housing recess 17b is substantially the same as a front-back width of the urea solution pump 19.

The pipe housing recess 17c illustrated in Figs. 17B and 19A is a recess for housing a drain pipe 18d to be described later. The pipe housing recess 17c is formed at a front end of the tank housing recess 17a. Further, the pipe housing recess 17c is formed in a shape in which a corner portion between a front side surface of the fuel tank 17 and a bottom surface (surface facing upward) of the tank housing recess 17a is recessed. As illustrated in Fig. 17B, the pipe housing recess 17c is formed so as to be inclined frontward and downward.

The band attachment recess 17d illustrated in Fig. 19A is a recess formed in a portion to which a front band member 82 to be described later is attached. The band attachment recess 17d is formed in the front-rear middle portion of the fuel tank 17. The band attachment recess 17d is formed in a shape in which a left side surface (side surface facing the inner side in the left-right direction) of the fuel tank 17 is recessed rightward (toward the outer side in the left-right direction). The band attachment recess 17d is located on the left side of the pump housing recess 17b.

The urea solution tank 18 is connected to the exhaust gas purification device 40 (DPF 41) through a hose or the like (see Fig. 9). The urea solution tank 18 is formed in a hollow shape. As illustrated in Figs. 17A, 17B, and 19B, the urea solution tank 18 includes a protruding portion 18a, a pump housing recess 18b, and a supply port 18c.

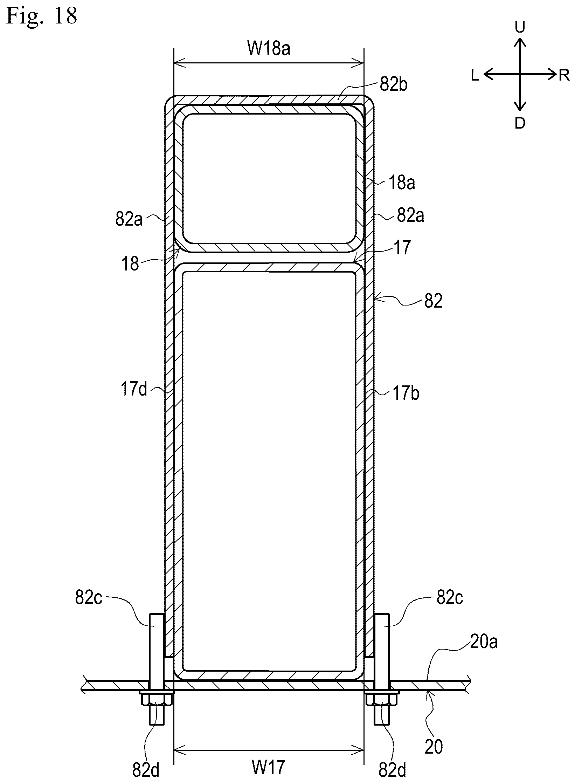

The protruding portion 18a is a portion protruding in a predetermined direction (rearward in the present embodiment). The protruding portion 18a is formed in a vertically middle portion of the rear surface of the urea solution tank 18. As illustrated in Fig. 19B, the protruding portion 18a is formed in a substantially rectangular shape in rear view. As illustrated in Fig. 18, a left-right width W18a of the protruding portion 18a is formed to have the same width as the left-right width from a bottom surface (surface facing leftward) of the band attachment recess 17d to a bottom surface (surface facing rightward) of the pump housing recess 17b in the fuel tank 17. Note that, hereinafter, for convenience of description, the left-right width from the bottom surface of the band attachment recess 17d to the bottom surface of the pump housing recess 17b is referred to as a "left-right width W17 of the fuel tank 17".

As illustrated in Fig. 19B, the left-right width W18a of the protruding portion 18a is formed to be a half or more of the left-right width W18 of the urea solution tank 18. The left-right width W18 will be described below.

A range R18 indicated by a broken line in Fig. 19B indicates a range having the same height as the protruding portion 18a in the urea solution tank 18. The left-right width W18 is a width along the left-right direction from the leftmost portion to the rightmost portion of the urea solution tank 18 in the range R18.

Since the left-right width W18a of the protruding portion 18a is formed to be half or more of the left-right width W18, the left-right width W18a of the protruding portion 18a can be made relatively large, so that the strength of the urea solution tank 18 (protruding portion 18a) can be secured. Note that the relationship between the left-right width W18a of the protruding portion 18a and the left-right width W18 is not limited to the present embodiment, and can be appropriately changed.

As illustrated in Fig. 19B, the pump housing recess 18b is a recess for housing the urea solution pump 19. The pump housing recess 18b is formed in a lower portion of a right side surface (side surface facing the outer side in the left-right direction) of the urea solution tank 18. The pump housing recess 18b is formed in a shape in which a portion from a front end to a rear end of the right side surface of the urea solution tank 18 is recessed leftward (toward the inner side in the left-right direction). The urea solution tank 18 is formed in a shape in which the upper portion bulges rightward with respect to the lower portion by forming the pump housing recess 18b.

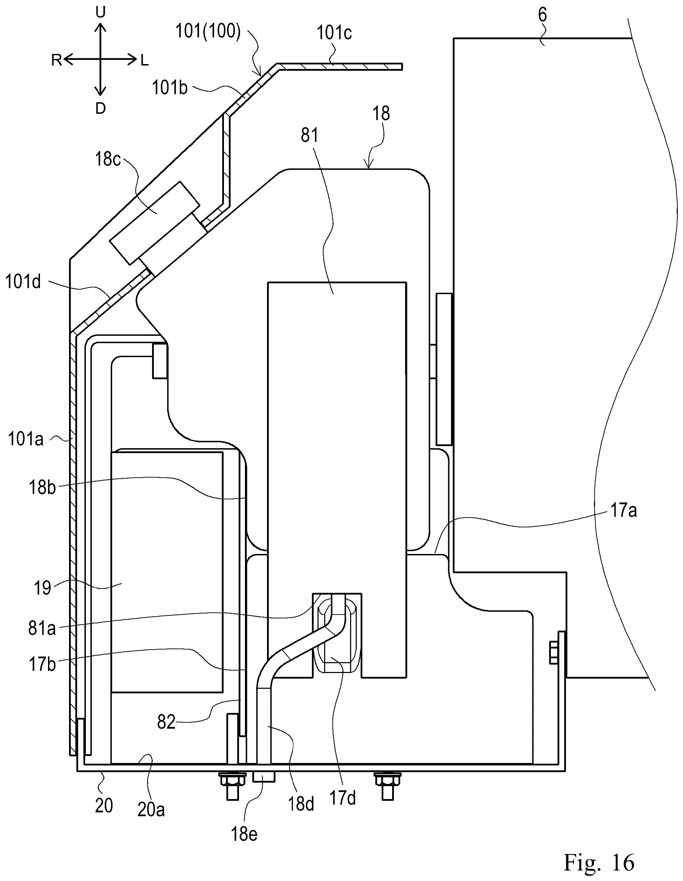

The supply port 18c illustrated in Figs. 16, 17A, and 17B is for supplying the urea solution to the urea solution tank 18. The supply port 18c is formed in an upper right portion of the urea solution tank 18. The supply port 18c includes an opening formed in the urea solution tank 18 and a cap detachably provided in the opening.

The urea solution tank 18 is provided with the drain pipe 18d for discharging the urea solution stored therein to the outside. The drain pipe 18d is connected to a lower surface of the urea solution tank 18, and is disposed so as to extend downward from the urea solution tank 18. A coupler 18e is provided at a lower end of the drain pipe 18d. The worker can discharge the urea solution in the urea solution tank 18 by removing the coupler 18e.

As illustrated in Figs. 17A and 17B, the lower portion of the urea solution tank 18 (the portion below the protruding portion 18a) is housed in the tank housing recess 17a of the fuel tank 17. Thus, the urea solution tank 18 is disposed on the upper side of the fuel tank 17. As described above, in the present embodiment, the fuel tank 17 is placed on the support base 20, and the urea solution tank 18 is disposed on the fuel tank 17. As a result, the support base 20 can be shared with a tractor without the urea solution tank 18 (for example, a tractor having relatively low horsepower and no SCR purification device).

Further, in a case where the fuel filler port of the fuel tank 17 is provided below the urea solution tank 18, even if fuel leaks from the fuel tank 17 at the time of supplying fuel or the like, it is possible to suppress the fuel from flowing through the fuel tank 17 and entering the urea solution tank 18 (to make it difficult for the fuel to enter). Furthermore, the installation space of the urea solution tank 18 can be secured by the tank housing recess 17a, and a vertical space necessary for installing the fuel tank 17 and the urea solution tank 18 can be reduced. Therefore, space saving can be achieved while securing a tank capacity by disposing the fuel tank 17 and the urea solution tank 18 close to each other.

As illustrated in Fig. 19B, the pump housing recess 18b of the urea solution tank 18 is located above the pump housing recess 17b of the fuel tank 17 in a state where the urea solution tank 18 is disposed above the fuel tank 17. Further, the bottom surface of the pump housing recess 18b and the bottom surface of the pump housing recess 17b are substantially flush with each other.

As illustrated in Figs. 17A and 17B, the protruding portion 18a is positioned behind the tank housing recess 17a in a state where the urea solution tank 18 is disposed above the fuel tank 17. As illustrated in Fig. 18, a left side surface of the protruding portion 18a is disposed so as to be substantially flush with the bottom surface of the band attachment recess 17d. Further, a right side surface of the protruding portion 18a is disposed so as to be substantially flush with the bottom surface of the pump housing recess 17b.

The urea solution pump 19 illustrated in Figs. 16, 19A, and 19B is connected to the urea solution tank 18 and the exhaust gas purification device 40 (DPF 41) through a hose (not illustrated), and is configured to pressure-feed the urea solution in the urea solution tank 18 to the exhaust gas purification device 40. The urea solution pump 19 is formed in a substantially rectangular parallelepiped shape.

The urea solution pump 19 is housed in the pump housing recess 17b of the fuel tank 17 and the pump housing recess 18b of the urea solution tank 18. At this time, the urea solution pump 19 is disposed so as not to protrude forward from the pump housing recess 17b. On the other hand, since a left-right width of the urea solution pump 19 is larger than a depth (left-right width) of the pump housing recess 18b of the urea solution tank 18, the right portion of the urea solution pump 19 is disposed so as to protrude rightward with respect to the urea solution tank 18.

By housing at least a part of the urea solution pump 19 in the pump housing recess 18b or the like in this manner, a space necessary for installing the urea solution pump 19 can be reduced (an installation space can be secured). Therefore, space saving can be achieved.

Further, the urea solution pump 19 is disposed on the outer side of the fuel tank 17 and the urea solution tank 18 in the left-right outer direction. Therefore, the fuel tank 17 and the like can be made less likely to interfere at the time of maintenance of the urea solution pump 19, and the urea solution pump 19 can be easily maintained.

Here, as described above, the pipe housing recess 17c is formed in the tank housing recess 17a. Therefore, as illustrated in Fig. 17B, in a state where the urea solution tank 18 is disposed on the upper side of the fuel tank 17, a space is secured between the lower surface of the urea solution tank 18 and the upper surface of the fuel tank 17 (the bottom surface of the tank housing recess 17a) by the pipe housing recess 17c.

The drain pipe 18d described above extends to the front side of the fuel tank 17 through the space (inside the pipe housing recess 17c). By disposing the drain pipe 18d using the pipe housing recess 17c in this manner, the fuel tank 17 and the urea solution tank 18 can be disposed close to each other. Therefore, the vertical space necessary for installing the fuel tank 17 and the urea solution tank 18 can be reduced, and space saving can be achieved. Since the drain pipe 18d is connected to the lower surface of the urea solution tank 18 (a portion different from the pump housing recess 18b), the drain pipe 18d can be suppressed from interfering with the urea solution pump 19. By connecting the drain pipe 18d to the lower surface of the urea solution tank 18, urea solution can be efficiently discharged from the urea solution tank 18.

Here, as described above, the supercharger 21 (see Fig. 3) is attached to the left side surface of the engine 3. The supercharger 21 is disposed at the lower left portion of the cabin 12. On the other hand, the urea solution tank 18 is disposed in the lower right portion of the cabin 12 and is disposed on the side opposite to the supercharger 21 across the engine 3 in the left-right direction. As a result, deterioration of urea solution in the urea solution tank 18 can be suppressed.

More specifically, since the opposite side of the supercharger 21 across the engine 3 is relatively away from the supercharger 21, the temperature is less likely to be high when the tractor 1 travels. In the present embodiment, by disposing the urea solution tank 18 on the opposite side of the supercharger 21, it is possible to suppress high temperature of the urea solution in the urea solution tank 18 during traveling of the tractor 1 and to suppress deterioration of the urea solution. Note that the positional relationship between the urea solution tank 18 and the supercharger 21 in the present embodiment is an example, and can be appropriately changed.

The tank fixing structure 80 illustrated in Figs. 17A and 17B is a structure for fixing the fuel tank 17 and the urea solution tank 18. The tank fixing structure 80 includes the support base 20, a coupling plate 81, the front band member 82, and a rear band member 83.

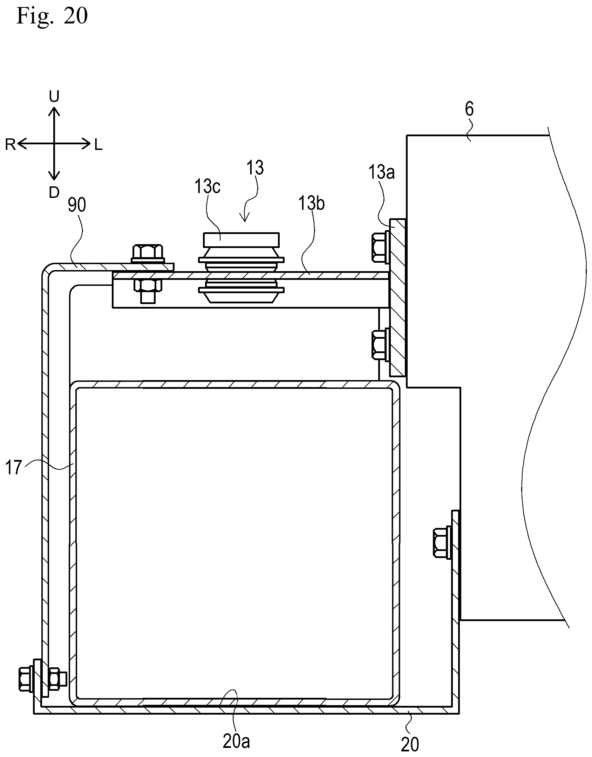

The support base 20 illustrated in Figs. 16, 17A, and 17B is a member on which the fuel tank 17 is placed. The support base 20 is formed in a substantially U shape in front view with the opening facing upward. The support base 20 is disposed on the right side (the outer side in the left-right direction) of the vehicle body and is fixed to the clutch housing 6 and the cabin support member 13 (see Fig. 20). Note that a structure for fixing the support base 20 will be described later. The fuel tank 17 is placed on a surface (placement surface 20a) facing upward of the support base 20.

Further, the urea solution pump 19 described above is fixed to the support base 20 through a predetermined member (bracket) or the like (not illustrated). As illustrated in Fig. 16, the urea solution pump 19 is supported by the support base 20 at a position higher than the placement surface 20a of the fuel tank 17. With this configuration, the urea solution pump 19 can be supported using the support base 20. Further, the placement surface 20a is less likely to interfere at the time of maintenance of the urea solution pump 19, and the urea solution pump 19 can be easily maintained.

The coupling plate 81 illustrated in Figs. 16, 17A, and 17B couples front side surfaces of the fuel tank 17 and the urea solution tank 18 to each other. The coupling plate 81 is formed in a rectangular plate shape in front view with the longitudinal direction oriented in the vertical direction. The coupling plate 81 is disposed across the fuel tank 17 and the urea solution tank 18, and is fixed to the fuel tank 17 and the urea solution tank 18, respectively. In this manner, the coupling plate 81 couples the fuel tank 17 and the urea solution tank 18 to each other. Note that notches 81a are formed in the coupling plate 81 of the present embodiment so as not to interfere with the drain pipe 18d (so as not to close the pipe housing recess 17c).

The front band member 82 illustrated in Figs. 17A, 17B, and 18 surrounds the outer peripheries of the fuel tank 17 and the urea solution tank 18 to fix the fuel tank 17 and the urea solution tank 18 to the support base 20. The front band member 82 is disposed on the rear side of the coupling plate 81. Further, the vertically middle portion of the front band member 82 overlaps the urea solution pump 19 in a side view (see Fig. 17A). As a result, the urea solution pump 19 and the front band member 82 can be disposed side by side in the left-right direction to reduce the front-rear space, so that space saving can be achieved.

As illustrated in Fig. 18, the front band member 82 is formed in an inverted U shape in front view with the opening facing downward, and is formed in a band shape surrounding both left and right side surfaces and an upper surface of the fuel tank 17 and the like. The front band member 82 includes a flat portion 82a, a connecting portion 82b, and a bolt portion 82c.

The flat portion 82a is a flat portion holding the fuel tank 17 and the urea solution tank 18. The flat portion 82a is disposed with the plate surface facing the left-right direction (horizontal direction). The flat portion 82a is formed in a rectangular shape in a side view with the longitudinal direction oriented in the vertical direction (see Fig. 17A). A pair of left and right flat portions 82a is provided. The width of the inner side surfaces of the left and right flat portions 82a is formed to be substantially the same as the left-right width W18a of the protruding portion 18a.

The connecting portion 82b is a portion that connects upper ends of the left and right flat portions 82a to each other. The connecting portion 82b is formed in a plate shape with a plate surface facing the vertical direction.

The bolt portion 82c is a shaft-shaped portion in which a male screw is formed on the outer peripheral surface. The bolt portion 82c is fixed to the lower end of the flat portion 82a and extends downward from the flat portion 82a. The bolt portion 82c is provided on each of the left and right flat portions 82a.

The rear band member 83 illustrated in Fig. 17A surrounds the outer periphery of the fuel tank 17 and fixes the fuel tank 17 to the support base 20. The rear band member 83 is wound around the rear end of the fuel tank 17. Since the configuration of the rear band member 83 is similar to the configuration of the front band member 82, the description of the configuration of the rear band member 83 is omitted.

Hereinafter, a procedure for fixing the fuel tank 17 and the urea solution tank 18 by a front band will be described. First, the urea solution tank 18 is disposed above the fuel tank 17 placed on the support base 20. At this time, as illustrated in Fig. 18, the positions of the urea solution tanks 18 are aligned so that both left and right side surfaces of the protruding portion 18a and both the left and right side surfaces of the fuel tank 17 (the bottom surfaces of the pump housing recess 17b and the band attachment recess 17d) are substantially flush with each other. As described above, since the left-right width W18a of the protruding portion 18a and the left-right width W17 of the fuel tank 17 are formed to have the same width (see Fig. 18), it is possible to easily align the urea solution tank 18.

After the urea solution tank 18 is disposed, the front band member 82 is wound around the protruding portion 18a of the urea solution tank 18 and the fuel tank 17. In this manner, the front band member 82 is provided so as to surround the outer peripheries (both the left and right side surfaces and the upper surface) of the fuel tank 17 and the protruding portion 18a. As described above, since the protruding portion 18a and both the left and right side surfaces of the fuel tank 17 are substantially flush, the worker can easily wind the front band member 82.

In a state where the front band member 82 is wound around the protruding portion 18a and the like, the bolt portion 82c is inserted into the support base 20. A nut 82d is screwed to the bolt portion 82c from the lower side of the support base 20. In this manner, the front band member 82 (flat portion 82a) is attached to the support base 20, and the fuel tank 17 and the urea solution tank 18 are fixed together to the support base 20 by the front band member 82. With this configuration, since the fuel tank 17 and the urea solution tank 18 can be collectively fixed by one front band member 82, a structure (tank fixing structure 80) for fixing various tanks can be simplified.

Further, in the present embodiment, the front band member 82 is attached to the recesses (pump housing recess 17b and band attachment recess 17d) formed in the fuel tank 17. As a result, the front band member 82 can be made difficult to protrude from the fuel tank 17, and space saving can be achieved.

Hereinafter, a structure for fixing the support base 20 (support base fixing structure) will be described with reference to Figs. 15 and 20. Note that Fig. 20 is a cross-sectional view taken along line A5-A5 in Fig. 15.

As described above, the support base 20 is formed in a substantially U shape in front view. Both left and right ends of the support base 20 are supported by the vehicle body. As illustrated in Fig. 20, in the present embodiment, the left end (inner-side end in the left-right direction) of the support base 20 is supported by a right side surface of the clutch housing 6. Further, the right end (outer-side end in the left-right direction) of the support base 20 is supported by the cabin support member 13 through the extension member 90. Hereinafter, configurations of the cabin support member 13 and the extension member 90 will be described.

The cabin support member 13 illustrated in Fig. 20 supports the front portion of the cabin 12. The cabin support member 13 is disposed above the support base 20. The cabin support member 13 is formed in a shape on which the cabin 12 can be placed. The cabin support member 13 includes a plate-shaped portion 13a, a longitudinal portion 13b, and a placement portion 13c.

The plate-shaped portion 13a is a plate-shaped portion with a plate surface facing the left-right direction. The plate-shaped portion 13a is fixed to the right side surface of the clutch housing 6. The longitudinal portion 13b is a portion extending outward (rightward) in the left-right direction from the plate-shaped portion 13a. The longitudinal portion 13b is disposed above the support base 20 with the fuel tank 17 interposed therebetween. The placement portion 13c is a portion on which the cabin 12 is placed (see Fig. 15). The placement portion 13c is made of rubber or the like, and is provided in the longitudinal portion 13b.

The extension member 90 is a member extending upward from the right end of the support base 20. The extension member 90 is formed in a plate shape. The extension member 90 extends upward from the right end of the support base 20, and is formed so that the upper end is bent leftward (cabin support member 13). The extension member 90 is fixed to the longitudinal portion 13b of the cabin support member 13 and the support base 20.

As described above, in addition to the left end (inner-side end in the left-right direction), a right end (outer-side end in the left-right direction) of the support base 20 of the present embodiment is also supported by the vehicle body. As a result, the weight of the fuel tank 17 and the like can be received by both the left and right ends of the support base 20, so that the support base 20 can be suppressed from bending and the support base 20 can be firmly supported.

Further, the support base 20, the extension member 90, and the cabin support member 13 are formed in a shape (frame shape) surrounding the lower surface, the right side surface, and the upper surface of the fuel tank 17. As a result, the support base 20 and the extension member 90 are hardly deformed (strength is improved), and the support base 20 can be firmly supported. Furthermore, vibration of the support base 20 and the like can be suppressed. Therefore, noise caused by vibration of the support base 20 and the like can be reduced.

Further, as illustrated in Figs. 15 and 16, a cover member 100 that covers the fuel tank 17, the urea solution tank 18, the drain pipe 18d, the urea solution pump 19, and the like is attached to the support base 20. The cover member 100 can protect the fuel tank 17 and the like. Hereinafter, an example of the configuration of the cover member 100 will be described. The cover member 100 includes a first plate 101 and a second plate 102.

The first plate 101 covers the urea solution pump 19 and the like from the right side and the upper side. The first plate 101 includes a vertical portion 101a, an inclined portion 101b, a horizontal portion 101c, and a cover recess 101d.

The vertical portion 101a is a portion extending in the vertical direction. The vertical portion 101a is formed in a plate shape with a plate surface facing the left-right direction. The vertical portion 101a is disposed on the right side of the urea solution pump 19 and the like. Further, the vertical portion 101a is disposed so as to extend from the front end to a front-rear middle portion of the support base 20. A lower end of the vertical portion 101a is fixed to the support base 20. Furthermore, a rear end of the vertical portion 101a is disposed so as to overlap the extension member 90 in a side view, and is fixed to the extension member 90. Thus, in the present embodiment, the cover member 100 is fixed to a plurality of members (the support base 20 and the extension member 90). Accordingly, the cover member 100 can be firmly supported.

The inclined portion 101b illustrated in Fig. 16 is a portion inclined with respect to the vertical direction and the left-right direction. The inclined portion 101b is formed so as to extend leftward and upward from the upper end of the vertical portion 101a. The inclined portion 101b is located on the upper right side of the urea solution tank 18.

The horizontal portion 101c is a portion extending in the horizontal direction. The horizontal portion 101c is formed to extend leftward from the upper left end of the inclined portion 101b. The horizontal portion 101c is located above the urea solution tank 18.

The cover recess 101d illustrated in Figs. 15 and 16 is a recess formed in the inclined portion 101b. The cover recess 101d is formed in a shape recessed downward (urea solution tank 18) in the inclined portion 101b.

The second plate 102 illustrated in Fig. 15 is a portion that covers the urea solution pump 19 and the like from the front side. The second plate 102 is disposed with a plate surface facing the front-rear direction. Further, the second plate 102 is disposed on a front side of the fuel tank 17, the drain pipe 18d (see Fig. 17B), and the like.

As illustrated in Fig. 16, the supply port 18c of the urea solution tank 18 is disposed so as to be exposed to the outside of the cover member 100 through the cover recess 101d. Further, the supply port 18c is disposed so as to fit (not to protrude) within the cover recess 101d. With this configuration, the supply port 18c can be protected by the cover recess 101d. Further, since the supply port 18c is exposed to the outside from the cover recess 101d, urea solution can be supplied without removing the cover member 100, and the urea solution can be easily supplied.

Note that the configuration of the cover member 100 described above is an example, and is not limited to the present embodiment. For example, although the cover recess 101d is formed in the cover member 100, the cover recess 101d may be omitted.

As described above, the tractor 1 (working vehicle) according to the present embodiment includes the radiator 22 that cools cooling water for the engine 3, and the plurality of first cooling devices disposed on the front side of the radiator 22 and slidably provided with respect to the vehicle body.

Note that, in the present embodiment, as examples of the first cooling devices, the oil cooler 23 and the condenser 24 provided to be slidable in the left-right direction are described (see Figs. 5 and 6).

With this configuration, when the maintenance work of the first cooling devices is performed, each of the plurality of first cooling devices (oil cooler 23 and condenser 24) can be moved to a position where maintenance can be easily performed. Therefore, even if the gap between the first cooling devices and the radiator 22 is narrowed, it is possible to suppress difficulty in maintenance of the first cooling devices.

Further, the first cooling devices include the oil cooler 23 that cools oil.

With such a configuration, even if the gap between the oil cooler 23 and the radiator 22 is narrowed, it is possible to suppress the difficulty in maintenance of the oil cooler 23.

Further, the first cooling devices include the condenser 24 that cools the refrigerant of the air-conditioning unit 16.

With such a configuration, even if the gap between the condenser 24 and the radiator 22 is narrowed, it is possible to suppress difficulty in maintenance of the condenser 24.

Further, the condenser 24 is disposed on the front side of an oil cooler 23 that cools oil (see Fig. 3).

With such a configuration, in a case where air flows from the front to the rear of the condenser 24, heat exchange can be performed in the condenser 24 before the oil cooler 23. Therefore, the cooling efficiency of the condenser 24 can be improved.

Further, the tractor 1 includes the engine room R in which the engine 3 and the first cooling devices (oil cooler 23 or the like) are disposed, and the hood 4 disposed on a front side of the operator's seat 14 and forming at least a part of the engine room R. The first cooling devices (oil cooler 23 and condenser 24) are disposed on an outer side of the front wheel 8 in a side view (see Fig. 7).

With such a configuration, even if the turning angle of the front wheels 8 is increased, the front wheels 8 can be prevented from interfering with the first cooling devices (oil cooler 23 and condenser 24).

Further, the first cooling devices (oil cooler 23 and condenser 24) are configured to slide in the left-right direction.

With such a configuration, the front wheels 8 are less likely to become an obstacle when the first cooling devices (oil cooler 23 and condenser 24) are slid, so that the first cooling devices are easily slid in the left-right direction.

The tractor 1 further includes a second cooling device disposed on the front side of the first cooling devices (oil cooler 23 and condenser 24) and provided so as not to be slidable with respect to the vehicle body.

Note that, in the present embodiment, the intercooler 25 fixed to the vehicle body is described as an example of the second cooling device (see Fig. 3).

With such a configuration, even if the gap between the first cooling devices (oil cooler 23 and condenser 24) and the second cooling device (intercooler 25) is narrowed, it is possible to suppress difficulty in maintenance of the first cooling devices.

Further, at least a part of the second cooling device (intercooler 25) overlaps the front wheel 8 in a side view (see Fig. 7).

With such a configuration, the space between the left and right front wheels 8 can be effectively utilized.

Further, the left-right width W25 of the second cooling device (intercooler 25) is smaller than the left-right widths W23 and W24 of the first cooling devices (oil cooler 23 and condenser 24) (see Fig. 4).

With this configuration, the left-right width W25 of the second cooling device (intercooler 25) can be made relatively small, so that the front wheels 8 can be prevented from interfering with the second cooling device even if the turning angle of the front wheels 8 is increased.

Further, the second cooling device includes an intercooler 25 that cools the compressed air supplied to the engine 3.

With this configuration, even if the gap between the first cooling devices (oil cooler 23 and condenser 24) and the intercooler 25 is narrowed, it is possible to suppress difficulty in maintenance of the first cooling devices.

Further, the position of the radiator 22 in the front-rear direction overlaps the position of the axle 8a of the front wheels 8 in the front-rear direction (see Fig. 7).

With such a configuration, even if the turning angle of the front wheels 8 is increased, it is possible to suppress the front wheels 8 from interfering with the radiator 22.

Note that the tractor 1 according to the present embodiment is an embodiment of the working vehicle.

Further, as described above, the tractor 1 (working vehicle) according to the present embodiment includes the exhaust gas purification device 40 that purifies the exhaust gas discharged from the engine 3, the intercooler 25 that cools compressed air supplied to the engine 3, and the cooler connection pipe 27 that at least partially overlaps the exhaust gas purification device 40 in a side view and connects the engine 3 and the intercooler 25.

Note that, in the present embodiment, a portion from a front end to a rear portion of the second extending portion 27b of the cooler connection pipe 27 overlaps the exhaust gas purification device 40 in a side view (see Figs. 12A and 12B).

With such a configuration, the exhaust gas purification device 40 and the cooler connection pipe 27 can be disposed in a vertically compact manner, and thus space saving can be achieved.

Further, the exhaust gas purification device 40 includes a first case (DPF case 41a) that collects particulate matter in the exhaust gas discharged from the engine 3 and a second case (SCR case 42a) that purifies nitrogen oxide in the exhaust gas, and at least a part of the cooler connection pipe 27 overlaps the first case and the second case in side view (see Figs. 12A and 12B).

With such a configuration, the DPF case 41a and the like and the cooler connection pipe 27 can be disposed in a vertically compact manner, and thus space saving can be achieved.

Further, in the cooler connection pipe 27, the portion overlapping the first case (DPF case 41a) and the second case (SCR case 42a) in a side view, the first case, and the second case overlap the engine 3 in plan view (see Fig. 13A).

With such a configuration, the first case (DPF case 41a), the second case (SCR case 42a), the cooler connection pipe 27, and the engine 3 are disposed vertically, and it is possible to reduce front-rear and left-right spaces necessary for installing the first case and the like, so that space saving can be achieved.

Further, at least a part of the cooler connection pipe 27 overlaps an upper portion of the engine 3 in a side view (see Figs. 12A and 12B).

With such a configuration, the engine 3 and the cooler connection pipe 27 can be disposed in a vertically compact manner, and thus space saving can be achieved.

Further, the first case (DPF case 41a) and the second case (SCR case 42a) are disposed with the longitudinal direction thereof oriented in the front-rear direction and are disposed side by side in the left-right direction (see Figs. 12A and 12B).

With such a configuration, the first case (DPF case 41a) and the second case (SCR case 42a) are disposed side by side in the left-right direction, and it is possible to reduce a vertical space necessary for installing the first case and the second case. Further, by disposing and orienting the first case and the second case in the front-rear direction, it is possible to reduce the left-right space necessary for installing the first case and the second case. Therefore, space saving can be achieved.

Further, in the cooler connection pipe 27, the portion overlapping the first case (DPF case 41a) and the second case (SCR case 42a) in a side view is disposed between an axis L41 of the first case and an axis L42 of the second case along the longitudinal direction in the left-right direction (see Figs. 13A and 13B).

With such a configuration, the cooler connection pipe 27 can be disposed using the left-right space between the first case (DPF case 41a) and the second case (SCR case 42a), so that space saving can be achieved.

Further, the recess 42b is formed in at least one of the first case (DPF case 41a) or the second case (SCR case 42a), and the cooler connection pipe 27 (second cooler pipe 29) is disposed so as to pass through the recess 42b (see Figs. 13B and 14).

With such a configuration, since an installation space of the cooler connection pipe 27 can be secured by the recess 42b, space saving can be achieved.

Note that the tractor 1 according to the present embodiment is an embodiment of the working vehicle.

Further, the DPF case 41a according to the present embodiment is an embodiment of the first case.

Furthermore, the SCR case 42a according to the present embodiment is an embodiment of the second case.

Further, as described above, the tractor 1 (working vehicle) according to the present embodiment includes the exhaust gas purification device 40 that purifies the exhaust gas discharged from the engine 3, and the support member 50 that supports the exhaust gas purification device 40 and is formed in a frame shape surrounding the upper portion of the engine 3 from the outside in the horizontal direction (see Figs. 8, 11A, and 11B).

With such a configuration, the support members 50 can be disposed in a vertically compact manner (with a lowered height position) with respect to the engine 3, and thus space saving can be achieved.

Further, the exhaust gas purification device 40 includes the first case (DPF case 41a) that collects particulate matter in the exhaust gas discharged from the engine 3 and the second case (SCR case 42a) that purifies nitrogen oxide in the exhaust gas.

With such a configuration, the height positions of the first case (DPF case 41a) and the second case (SCR case 42a) can be lowered.

Further, the support member 50 is disposed at a position lower than the upper end of the head cover 3a of the engine 3 (see Fig. 8).

With such a configuration, the height position of the support member 50 can be made relatively low.

Further, the support member 50 is disposed in front of the rear surface of the flywheel housing 5 that houses the flywheel (see Fig. 8).

With such a configuration, it is possible to dispose the support member 50 relatively in front and secure a space behind the support member 50.

Further, the support member 50 supports an electrical component (connector 61a) of the exhaust gas purification device 40 (see Fig. 8).

With such a configuration, the exhaust gas purification device 40 and the connector 61a can be supported by a common member (support member 50).

Further, the support member 50 is configured to support the electrical component by coupling an electrical component fixing member (connector fixing member 59) to which the electrical component (connector 61a) is fixed, and the electrical component is disposed at a position lower than a coupling portion P59 between the support member 50 and the electrical component fixing member (see Fig. 8).

With such a configuration, it is possible to alleviate the influence of heat on the electrical component (connector 61a).

More specifically, since the heat generated in the engine 3 and the like rises, the higher the position, the higher the temperature tends to be. In the present embodiment, since the electrical component (connector 61a) can be disposed at a relatively low position, the influence of heat on the electrical component can be mitigated.

Further, the support member 50 includes a heat shielding plate 55 that covers the supercharger 21 of the engine 3 (see Fig. 8).

With such a configuration, the heat shielding plate 55 can suppress transfer of the heat of the supercharger 21 to other members.

Further, the support member 50 supports the temperature sensor 64 that detects the temperature of the exhaust gas (see Fig. 8).

With such a configuration, the exhaust gas purification device 40 and the temperature sensor 64 can be supported by a common member (support member 50).

Further, the support member 50 includes the outer member 56 surrounding the left and right outer sides and the upper side of the exhaust gas purification device 40 (see Figs. 8 and 11 B).

With such a configuration, the periphery of the exhaust gas purification device 40 can be surrounded by the outer member 56.

Further, the outer member 56 is provided with the fulcrum portion 70 serving as the rotation fulcrum of the hood 4 (see Fig. 8).

With such a configuration, the exhaust gas purification device 40 and the fulcrum portion 70 can be supported by a common member (support member 50).

Further, the fulcrum portion 70 overlaps the exhaust gas purification device 40 in plan view (see Figs. 8 and 11B).

With such a configuration, the exhaust gas purification device 40 and the fulcrum portion 70 can be disposed vertically, and it is possible to reduce a front-rear space necessary for installing the exhaust gas purification device 40, the fulcrum portion 70, and the like. Therefore, space saving can be achieved.

Note that the tractor 1 according to the present embodiment is an embodiment of the working vehicle.

Further, the DPF case 41a according to the present embodiment is an embodiment of the first case.

Furthermore, the SCR case 42a according to the present embodiment is an embodiment of the second case.

Further, the connector 61a according to the present embodiment is an embodiment of an electrical component.

Furthermore, the connector fixing member 59 according to the present embodiment is an embodiment of the electrical component fixing member.

Further, as described above, the tractor 1 (working vehicle) according to the present embodiment includes the cooling fan 3c provided in the engine 3, the fan shroud 22a that is formed so as to surround the cooling fan 3c and guides air, and the exhaust gas purification device 40 that is disposed so as to fit within the left-right width W22 of the fan shroud 22a and purifies the exhaust gas discharged from the engine 3 (see Fig. 9).

With such a configuration, the exhaust gas purification device 40 is disposed so as to fit within the left-right width W22 of the fan shroud 22a, and the left-right space necessary for installing the exhaust gas purification device 40 and the fan shroud 22a can be made relatively small. Therefore, space saving can be achieved.

Further, the exhaust gas purification device 40 includes the first case (DPF case 41a) that collects particulate matter in the exhaust gas discharged from the engine 3 and the second case (SCR case 42a) that purifies nitrogen oxide in the exhaust gas.

With such a configuration, the first case (DPF case 41a) and the second case (SCR case 42a) are disposed so as to fit within the left-right width W22 of the fan shroud 22a, and the left-right space necessary for installing the first case and the second case can be made relatively small. Therefore, space saving can be achieved.

Further, the first case (DPF case 41a) and the second case (SCR case 42a) are disposed in front of the rear surface of the flywheel housing 5 that houses the flywheel (see Fig. 8).

With such a configuration, the first case (DPF case 41a) and the second case (SCR case 42a) can be disposed relatively in front, and a space can be secured behind the first case and the second case.

Further, the first case (DPF case 41a) and the second case (SCR case 42a) are disposed with the longitudinal direction thereof oriented in the front-rear direction and are disposed side by side in the left-right direction (see Figs. 12A and 12B).

With such a configuration, the first case (DPF case 41a) and the second case (SCR case 42a) are disposed side by side in the left-right direction, and it is possible to reduce a vertical space necessary for installing the first case and the second case. Further, by disposing the first case and the second case with the longitudinal direction thereof oriented in the front-rear direction, it is possible to reduce the left-right space necessary for installing the first case and the second case. Therefore, space saving can be achieved.

The tractor 1 further includes the intercooler 25 that cools compressed air supplied to the engine 3, and the cooler connection pipe 27 that is disposed so as to pass between the first case (DPF case 41a) and the second case (SCR case 42a) and connects the engine 3 and the intercooler 25 (see Figs. 3, 12A, and 12B).

With such a configuration, the cooler connection pipe 27 can be disposed using a space between the first case (DPF case 41a) and the second case (SCR case 42a), so that space saving can be achieved.

The tractor 1 further includes a differential pressure sensor 67 that overlaps the first case (DPF case 41a) in a side view and detects a differential pressure of the exhaust gas between the first portion 67c of the first case and the second portion 67d downstream of the first portion 67c in the flowing direction of the exhaust gas (see Figs. 10A and 10B).

With such a configuration, it is possible to alleviate the influence of heat on the differential pressure sensor 67.

More specifically, since the heat generated in the engine 3 and the like rises, the higher the position, the higher the temperature tends to be. In the present embodiment, by disposing the differential pressure sensor 67 so as to overlap the first case (DPF case 41a) in side view, it is possible to suppress the height position of the differential pressure sensor 67 from becoming higher than necessary. Therefore, it is possible to suppress the differential pressure sensor 67 from becoming a high temperature (to alleviate the influence of heat).

The differential pressure sensor 67 is disposed between the first portion 67c and the second portion 67d in the front-rear direction, and the tractor 1 further includes a first connection pipe 67a extending downward from the differential pressure sensor 67 toward the first portion 67c and the second connection pipe 67b extending downward from the differential pressure sensor 67 toward the second portion 67d (see Figs. 10A and 10B).

With such a configuration, in the first connection pipe 67a and the second connection pipe 67b, condensed water (water in which moisture contained in the exhaust gas is condensed) can flow so as to be away from the differential pressure sensor 67, so that it is possible to suppress the occurrence of a defect in the differential pressure sensor 67.

By disposing the differential pressure sensor 67 between the first portion 67c and the second portion 67d, the first connection pipe 67a and the second connection pipe 67b can be extended from the differential pressure sensor 67 in different directions (forward or backward), so that the first connection pipe 67a and the second connection pipe 67b can be easily disposed.

Further, the tractor 1 further includes the hood 4 having the opening 4a formed in an upper surface thereof (see Fig. 8).

With such a configuration, the heat in the hood 4 can be discharged to the outside of the hood 4 by the opening 4a, and the temperature in the hood 4 can be lowered.

Note that the tractor 1 according to the present embodiment is an embodiment of the working vehicle.

Further, the DPF case 41a according to the present embodiment is an embodiment of the first case.

Furthermore, the SCR case 42a according to the present embodiment is an embodiment of the second case.

Further, as described above, the tractor 1 (working vehicle) according to the present embodiment includes: the exhaust gas purification device 40 that includes the first case (DPF case 41a), the second case (SCR case 42a), and the coupling pipe 44 that couples the first case and the second case to each other, and purifies the exhaust gas discharged from the engine 3; and the support member 50 that supports the exhaust gas purification device 40, in which the coupling pipe 44 is disposed so as to fit within the left-right width W50 of the support member 50 (see Fig. 9).

With such a configuration, since the coupling pipe 44 fits within the left-right width W50 of the support member 50, it is possible to relatively reduce the left-right space necessary for installing the support member 50 and the coupling pipe 44. Therefore, space saving can be achieved.

Further, the first case (DPF case 41a) collects particulate matter in exhaust gas discharged from the engine 3, and the second case (SCR case 42a) purifies nitrogen oxide in the exhaust gas.

With this configuration, space saving can be achieved in the configuration in which the first case (DPF case 41a) that collects particulate matter in the exhaust gas and the second case (SCR case 42a) that purifies nitrogen oxide in the exhaust gas are coupled by the coupling pipe 44.

Further, the first case (DPF case 41a) and the second case (SCR case 42a) are disposed with the longitudinal direction thereof oriented in the front-rear direction and are disposed side by side in the left-right direction (see Figs. 12A and 12B).

With such a configuration, the first case (DPF case 41a) and the second case (SCR case 42a) are disposed side by side in the left-right direction, and it is possible to reduce a vertical space necessary for installing the first case and the second case. Further, by disposing the first case and the second case with the longitudinal direction thereof oriented in the front-rear direction, it is possible to reduce the left-right space necessary for installing the first case and the second case. Therefore, space saving can be achieved.

Further, the coupling pipe 44 is disposed with the longitudinal direction thereof oriented in the left-right direction (see Figs. 10A and 10B).

With such a configuration, since the first case (DPF case 41a) and the second case (SCR case 42a) can be connected at a short distance, the length of the coupling pipe 44 can be shortened, and space saving can be achieved.

Further, the coupling pipe 44 overlaps the first case (DPF case 41a) and the second case (SCR case 42a) in side view (see Fig. 10B).

With such a configuration, the first case (DPF case 41a) and the second case (SCR case 42a) and the coupling pipe 44 are disposed so as to overlap each other in a side view, whereby spaces can be secured above and below the first case, the coupling pipe 44, and the like.

Further, the coupling pipe 44 is configured to couple front ends of the first case (DPF case 41a) and the second case (SCR case 42a) to each other, and the exhaust gas flows into the second case through the coupling pipe 44 after flowing through the first case forward, and flows through the second case rearward (see Fig. 9).

With such a configuration, the flow path of the exhaust gas can be simplified.

The tractor 1 further includes the exhaust pipe 45 that discharges the exhaust gas purified by the exhaust gas purification device 40 from the left side of the vehicle body toward the external space (see Figs. 1 and 9).

With this configuration, the exhaust pipe 45 does not interfere with visual recognition of the right side of the tractor 1, so that the field of view on the right side of the tractor 1 can be secured.

Further, since the worker often drives the tractor 1 while watching the right side of the tractor 1 where many operation tools and the like are disposed, the worker can easily drive the tractor 1 by securing the field of view on the right side of the tractor 1.

Further, the support member 50 is formed in a frame shape surrounding the upper portion of the engine 3 from the outside in the horizontal direction (see Figs. 8, 11A, and 11B).

With such a configuration, the support members 50 can be disposed in a vertically compact manner (with a lowered height position) with respect to the engine 3, and thus space saving can be achieved.

Note that the tractor 1 according to the present embodiment is an embodiment of the working vehicle.

Further, the DPF case 41a according to the present embodiment is an embodiment of the first case.

Furthermore, the SCR case 42a according to the present embodiment is an embodiment of the second case.

Further, as described above, the tractor 1 (working vehicle) according to the present embodiment includes the exhaust gas purification device 40 that purifies the exhaust gas discharged from the engine 3, and the fulcrum portion 70 that is disposed above the exhaust gas purification device 40 and is a rotation fulcrum of the hood 4 (see Figs. 8, 11A, and 11B).

With such a configuration, the exhaust gas purification device 40 and the fulcrum portion 70 (the rotation shaft 72 and the like) can be disposed vertically, and it is possible to reduce a front-rear space necessary for installing the exhaust gas purification device 40 and the like. Accordingly, the overall length (longitudinal length) of the hood 4 can be shortened.

Further, the exhaust gas purification device includes the first case (DPF case 41a) that collects particulate matter in exhaust gas discharged from the engine 3 and the second case (SCR case 42a) that purifies nitrogen oxide in the exhaust gas.

With such a configuration, the first case (DPF case 41a) and the second case (SCR case 42a) and the fulcrum portion 70 can be disposed vertically, and it is possible to reduce a front-rear space necessary for installing the exhaust gas purification device 40 and the like. Thus, the overall length of the hood 4 can be shortened.

Further, the first case (DPF case 41a) and the second case (SCR case 42a) are disposed with the longitudinal direction thereof oriented in the front-rear direction and are disposed side by side in the left-right direction (see Figs. 12A and 12B).

With such a configuration, the first case (DPF case 41a) and the second case (SCR case 42a) are disposed side by side in the left-right direction, and it is possible to reduce the vertical space necessary for installing the first case and the second case and to reduce the height of the hood 4. Further, by disposing the first case and the second case with the longitudinal direction thereof oriented in the front-rear direction, the left-right width of the hood 4 can be reduced.

The tractor 1 further includes an outer member 56 surrounding left and right outer sides and an upper side of the first case (DPF case 41a) and the second case (SCR case 42a), and the fulcrum portion 70 includes a rotation shaft 72 that is provided on the outer member 56 and rotatably supports the hood 4 (see Figs. 8, 11A, and 11B).

This configuration makes it difficult for the hood 4 to be displaced in the twisting direction.

More specifically, the outer member 56 surrounding the left and right outer sides and the upper side of the first case (DPF case 41a) and the second case (SCR case 42a) is hardly deformed in the direction in which the hood 4 is twisted (clockwise direction and counterclockwise direction in front view). In the present embodiment, the outer member 56 is provided with the rotation shaft 72, so that the hood 4 is less likely to be displaced in the twisting direction (torsional strength can be improved).

The tractor 1 further includes a support member 50 that has the outer member 56 and supports the first case (DPF case 41a) and the second case (SCR case 42a) (see Figs. 8, 11A, and 11B).

With such a configuration, the first case (DPF case 41a), the second case (SCR case 42a), and the fulcrum portion 70 can be supported by a common member (support member 50).

Further, the support member 50 is formed in a frame shape surrounding the upper portion of the engine 3 from the outside in the horizontal direction (see Figs. 8, 11A, and 11B).

With such a configuration, the support member 50 can be disposed in a vertically compact manner (with a lowered height position) with respect to the engine 3. Accordingly, the height of the hood 4 can be lowered by lowering the height positions of the first case (DPF case 41a) and the second case (SCR case 42a).

Further, the rotation shaft 72 is disposed so as to fit within a left-right width W50 of the support member 50 (see Fig. 11A).

With such a configuration, since the rotation shaft 72 fits within the left-right width W50 of the support member 50, it is possible to relatively reduce the left-right space necessary for installing the rotation shaft 72. The hood 4 thus has a reduced left-right width.

Note that the tractor 1 according to the present embodiment is an embodiment of the working vehicle.

Further, the DPF case 41a according to the present embodiment is an embodiment of the first case.

Furthermore, the SCR case 42a according to the present embodiment is an embodiment of the second case.

Further, as described above, the tractor 1 (working vehicle) according to the present embodiment includes the urea solution tank 18 that stores urea solution, and the urea solution pump 19 that supplies the urea solution in the urea solution tank 18 to the exhaust gas purification device 40 that purifies the exhaust gas of the engine 3, and the urea solution tank 18 is provided with the first pump housing recess (pump housing recess 18b) that houses at least a part of the urea solution pump 19 (see Fig. 19B).

With such a configuration, since an installation space of the urea solution pump 19 can be secured by the first pump housing recess (pump housing recess 18b), space saving can be achieved.

Further, the first pump housing recess (pump housing recess 18b) is formed on a side surface (right side surface) of the urea solution tank 18 facing the outer side of the vehicle body in the left-right direction (see Fig. 19B).

With such a configuration, the urea solution pump 19 can be disposed on the outer side of the urea solution tank 18 in the left-right direction, and the urea solution pump 19 can be easily maintained.

Further, the first pump housing recess (pump housing recess 18b) is formed in a lower portion of the side surface facing the outer side of the urea solution tank 18 in the left-right direction so that a portion from a front end to a rear end of the urea solution tank 18 is recessed toward the inner side in the left-right direction (see Figs. 17B and 19B).

With this configuration, the urea solution pump 19 can be disposed below the urea solution tank 18.

The tractor 1 further includes the fuel tank 17 that stores fuel, and the urea solution tank 18 is disposed above the fuel tank 17 (see Figs. 17A and 17B).

With such a configuration, it is possible to make it difficult for fuel to enter the urea solution tank 18.

Further, in the fuel tank 17, a second pump housing recess (pump housing recess 17b) for housing at least a part of the urea solution pump 19 is formed (see Figs. 19A and 19B).

With such a configuration, since an installation space of the urea solution pump 19 can be secured by the second pump housing recess (pump housing recess 17b), space saving can be achieved.

Further, the second pump housing recess (pump housing recess 17b) is formed in a side surface (right side surface) of the fuel tank 17 facing the left and right outer sides of the vehicle body (see Figs. 19A and 19B).

With such a configuration, the urea solution pump 19 can be disposed on the left and right outer sides of the fuel tank 17, and the urea solution pump 19 can be easily maintained.

Further, the second pump housing recess (pump housing recess 17b) is formed in a shape in which a portion from a front end of a side surface facing the left-right outside to a front-rear middle portion is recessed toward the left-right inside (see Fig. 19).

With this configuration, the urea solution pump 19 can be disposed around the front portion of the fuel tank 17.

The tractor 1 further includes the cover member 100 that covers the urea solution tank 18, the cover member 100 is formed with the cover recess 101d recessed toward the urea solution tank 18, and the supply port 18c for supplying urea solution to the urea solution tank 18 is disposed in the cover recess 101d so as to be exposed to the outside of the cover member 100 (see Figs. 15 and 16).

With such a configuration, the supply port 18c can be protected by the cover recess 101d. Further, since the supply port 18c is exposed to the outside from the cover recess 101d, urea solution can be supplied without removing the cover member 100, and the urea solution can be easily supplied.

Further, the urea solution tank 18 is disposed on a side opposite to the supercharger 21 across the engine 3 in the left-right direction (see Figs. 3 and 15).

With such a configuration, it is possible to suppress the deterioration of the urea solution in the urea solution tank 18.

More specifically, since the opposite side of the supercharger 21 across the engine 3 is relatively away from the supercharger 21, the temperature is less likely to be high when the tractor 1 travels. In the present embodiment, by disposing the urea solution tank 18 on the opposite side of the supercharger 21, it is possible to suppress high temperature of the urea solution in the urea solution tank 18 during traveling of the tractor 1 and to suppress deterioration of the urea solution.

Note that the tractor 1 according to the present embodiment is an embodiment of the working vehicle.

Further, the pump housing recess 18b of the urea solution tank 18 according to the present embodiment is an embodiment of the first pump housing recess.

Furthermore, the pump housing recess 17b of the fuel tank 17 according to the present embodiment is an embodiment of the second pump housing recess.

Further, as described above, the tractor 1 (working vehicle) according to the present embodiment includes: the urea solution tank 18 provided with the drain pipe 18d for discharging urea solution to the outside; and the fuel tank 17 in which the pipe housing recess 17c for housing at least a part of the drain pipe 18d is formed, the fuel tank 17 being disposed below the urea solution tank 18 and storing fuel (see Fig. 17B).

With such a configuration, since the urea solution tank 18 is disposed above the fuel tank 17, it is possible to achieve a configuration in which fuel hardly enters the urea solution tank 18. Further, the installation space of the drain pipe 18d is secured by the pipe housing recess 17c, and the fuel tank 17 and the urea solution tank 18 can be disposed close to each other. Therefore, space saving can be achieved.

On the upper surface of the fuel tank 17, the tank housing recess 17a that is recessed downward and houses at least a part of the urea solution tank 18 is formed (see Figs. 17A and 17B).

With such a configuration, since an installation space of the urea solution tank 18 can be secured by the tank housing recess 17a, space saving can be achieved.

Further, the pipe housing recess 17c is formed in the tank housing recess 17a (see Fig. 17B).

With such a configuration, the drain pipe 18d can be easily connected to a portion (for example, the lower surface) of the urea solution tank 18 where urea solution can be efficiently discharged.

Further, the tank housing recess 17a is formed at a front end of the fuel tank 17, and the pipe housing recess 17c is formed in a shape in which the corner portion between the front side surface of the fuel tank 17 and the bottom surface of the tank housing recess 17a is recessed (see Fig. 17B).

With this configuration, the drain pipe 18d can be easily extended from the urea solution tank 18 to the front side of the fuel tank 17 through the pipe housing recess 17c.

The tractor 1 further includes the urea solution pump 19 that supplies urea solution in the urea solution tank 18 to the exhaust gas purification device 40 that purifies exhaust gas of the engine 3, and the urea solution tank 18 is provided with the pump housing recess 18b that houses at least a part of the urea solution pump 19 (see Fig. 19B).

With such a configuration, since an installation space of the urea solution pump 19 can be secured by the pump housing recess 18b, space saving can be achieved.

Further, the drain pipe 18d is connected to a portion (lower surface) of the urea solution tank 18 different from the pump housing recess 18b (see Fig. 17B).

With such a configuration, it is possible to suppress the drain pipe 18d from interfering with the urea solution pump 19.

The tractor 1 further includes the cover member 100 that covers the urea solution tank 18 and the drain pipe 18d (see Figs. 15 and 16).

With such a configuration, the urea solution tank 18 and the drain pipe 18d can be protected by the cover member 100.

Further, the cover recess 101d recessed toward the urea solution tank 18 is formed in the cover member 100, and the supply port 18c for supplying urea solution to the urea solution tank 18 is disposed in the cover recess 101d so as to be exposed to the outside of the cover member 100 (see Figs. 15 and 16).

With such a configuration, the supply port 18c can be protected by the cover recess 101d. Further, since the supply port 18c is exposed to the outside from the cover recess 101d, urea solution can be supplied without removing the cover member 100, and the urea solution can be easily supplied.

Further, the urea solution tank 18 is disposed on a side opposite to the supercharger 21 across the engine 3 in the left-right direction (see Figs. 3 and 15).

With such a configuration, it is possible to suppress the deterioration of the urea solution in the urea solution tank 18.

More specifically, since the opposite side of the supercharger 21 across the engine 3 is relatively away from the supercharger 21, the temperature is less likely to be high when the working vehicle travels. In claim 9, by disposing the urea solution tank 18 on the opposite side of the supercharger 21, it is possible to suppress high temperature of the urea solution in the urea solution tank 18 during traveling of the working vehicle and to suppress deterioration of the urea solution.

Note that the tractor 1 according to the present embodiment is an embodiment of the working vehicle.

Further, as described above, the tractor 1 (working vehicle) according to the present embodiment includes the fuel tank 17 that stores fuel, and the support base 20 that is disposed on the outer sides of the vehicle body in the left-right direction, the fuel tank 17 being placed on the support base, the support base supporting both left and right side portions of the fuel tank (see Fig. 20).

With such a configuration, the support base 20 can be firmly supported by supporting both the left and right sides of the support base 20.

Further, left and right inner side portions (left ends) of the support base 20 are supported by a housing member (clutch housing 6) that houses a clutch (see Fig. 20).

With such a configuration, the left and right inner sides of the support base 20 can be supported using the housing member (clutch housing 6).

Further, left and right outer side portions (right ends) of the support base 20 are supported by a cabin support member 13 that supports the cabin 12 (see Fig. 20).

With such a configuration, the left and right outer sides of the support base 20 can be supported using the cabin support member 13.

Further, the cabin support member 13 is disposed above the support base 20, and the left and right outer side portions (right ends) of the support base 20 are supported by the cabin support member 13 through extension members 90 extending upward from the left and right outer side portions of the support base 20 (see Fig. 20).

With such a configuration, the support base 20 can be supported by the cabin support member 13 through the extension member 90.

Further, the support base 20, the extension member 90, and the cabin support member 13 are formed in shapes surrounding the lower surface, the left and right outer side surfaces, and the upper surface of the fuel tank 17 (see Fig. 20).

With this configuration, the support base 20, the extension member 90, and the cabin support member 13 are formed in shapes surrounding the fuel tank 17, so that the support base 20 can be firmly supported.

The tractor 1 further includes the urea solution pump 19 that supplies urea solution to the exhaust gas purification device 40 that purifies the exhaust gas of the engine 3, and the support base 20 supports the urea solution pump 19 at a position higher than the placement surface 20a of the fuel tank 17 (see Fig. 16).

With such a configuration, the urea solution pump 19 can be supported using the support base 20. Further, the placement surface 20a is less likely to interfere at the time of maintenance of the urea solution pump 19, and the urea solution pump 19 can be easily maintained.

Note that the tractor 1 according to the present embodiment is an embodiment of the working vehicle.

Further, the clutch housing 6 according to the present embodiment is an embodiment of the housing member.

Further, as described above, the tractor 1 (working vehicle) according to the present embodiment includes the fuel tank 17 that stores fuel, the urea solution tank 18 that stores urea solution, and the band member (front band member 82) that surrounds the outer peripheries of the fuel tank 17 and the urea solution tank 18 and fixes the fuel tank 17 and the urea solution tank 18 to the fixing member (see Figs. 17A, 17B, and 18).

With this configuration, the fuel tank 17 and the urea solution tank 18 can be fixed together by surrounding and fixing the fuel tank 17 and the like with the band member (front band member 82). As a result, the structure for fixing the fuel tank 17 and the urea solution tank 18 can be simplified.

Further, the urea solution tank 18 is disposed above the fuel tank 17 (see Figs. 17A and 17B).

With such a configuration, it is possible to make it difficult for fuel to enter the urea solution tank 18.

Further, the band member (front band member 82) is oriented in the horizontal direction and has a pair of flat portions 82a holding the fuel tank 17 and the urea solution tank 18, and a width of a portion of the fuel tank 17 held by the pair of flat portions 82a is formed to be the same width as a width of a portion of the urea solution tank 18 held by the pair of flat portions 82a.

Note that, in the present embodiment, as illustrated in Fig. 18, a band member (front band member 82) is provided so as to surround the bottom surface of the pump housing recess 17b and the bottom surface of the band attachment recess 17d of the fuel tank 17. Therefore, the left-right width W17 from the bottom surface of the pump housing recess 17b to the bottom surface of the band attachment recess 17d corresponds to the width of the portion of the fuel tank 17 held by the pair of flat portions 82a.

Further, in the present embodiment, since the protruding portion 18a is surrounded by the band member (front band member 82), the left-right width W18a of the protruding portion 18a corresponds to the width of the portion (protruding portion 18a) held by the pair of flat portions 82a in the urea solution tank 18.

With such a configuration, the fuel tank 17 and the urea solution tank 18 can be easily fixed by the band member (front band member 82).

More specifically, since the band member can be wound in a state where the fuel tank 17 and the urea solution tank 18 (the portion surrounded by the flat portion 82a) are flush with each other, alignment of the tanks and the operation of winding the band member can be easily performed.

Further, in the urea solution tank 18, the width of the portion held by the pair of flat portions 82a (left-right width W18a of the protruding portion 18a) is half or more of a width from one end to the other end of the urea solution tank 18 (left-right width W18 of the urea solution tank 18) in a direction (left-right direction) perpendicular to the flat portion 82a at the same height as the portion held by the pair of flat portions 82a (see Fig. 19B).

With such a configuration, in the urea solution tank 18, the width of the portion surrounded by the pair of flat portions 82a (the left-right width W18a of the protruding portion 18a) can be made relatively large, and the strength of the urea solution tank 18 can be secured.

Further, the fixing member includes a support base 20 on which the fuel tank 17 is placed, and the pair of flat portions 82a is attached to the support base 20 (see Fig. 18).

With such a configuration, the band member (front band member 82) can be fixed using the support base 20.

Further, in the urea solution tank 18, the protruding portion 18a protruding in the predetermined direction (rearward) is formed, and the band member (front band member 82) is provided so as to surround the outer periphery of the protruding portion 18a (see Figs. 17A, 17B, and 18).

With such a configuration, the urea solution tank 18 can be fixed by attaching the band member (front band member 82) to the protruding portion 18a.

The tractor 1 further includes the urea solution pump 19 that supplies urea solution in the urea solution tank 18 to the exhaust gas purification device 40 that purifies exhaust gas of the engine 3, and at least a part of the band member (front band member 82) overlaps the urea solution pump 19 in a side view (see Fig. 17A).

With such a configuration, it is possible to reduce the front-rear space by disposing the urea solution pump 19 and the band member (front band member 82) side by side on the left and right, so that it is possible to achieve space saving.

Further, in the urea solution tank 18, the pump housing recess 18b for housing at least a part of the urea solution pump 19 is formed (see Fig. 19B).

With such a configuration, since an installation space of the urea solution pump 19 can be secured by the pump housing recess 18b, space saving can be achieved.

The tractor 1 further includes the cover member 100 that covers the urea solution tank 18, the cover member 100 is formed with the cover recess 101d recessed toward the urea solution tank 18, and the supply port 18c for supplying urea solution to the urea solution tank 18 is disposed in the cover recess 101d so as to be exposed to the outside of the cover member 100 (see Figs. 15 and 16).

With such a configuration, the supply port 18c can be protected by the cover recess 101d. Further, since the supply port 18c is exposed to the outside from the cover recess 101d, urea solution can be supplied without removing the cover member 100, and the urea solution can be easily supplied.

Further, the urea solution tank 18 is disposed on a side opposite to the supercharger 21 across the engine 3 in the left-right direction (see Figs. 3 and 15).

With such a configuration, it is possible to suppress the deterioration of the urea solution in the urea solution tank 18.

More specifically, since the opposite side of the supercharger 21 across the engine 3 is relatively away from the supercharger 21, the temperature is less likely to be high when the tractor 1 travels. In the present embodiment, by disposing the urea solution tank 18 on the opposite side of the supercharger 21, it is possible to suppress high temperature of the urea solution in the urea solution tank 18 during traveling of the tractor 1 and to suppress deterioration of the urea solution.

Note that the tractor 1 according to the present embodiment is an embodiment of the working vehicle.

Further, the front band member 82 according to the present embodiment is an embodiment of the band member.

Further, as described above, the tractor 1 (working vehicle) according to the present embodiment includes the exhaust gas purification device 40 that includes the first case (DPF case 41a) and the second case (SCR case 42a) disposed to face the front-rear direction and purifies the exhaust gas discharged from the engine 3, and the first recess (lower recess 41e of DPF case 41a and recess 42b of SCR case 42a) is formed at the front end of at least one of the first case or the second case (see Figs. 10C and 14).

With such a configuration, since another member (for example, a pipe or the like) can be disposed using the first recess (lower recess 41e and recess 42b), space saving can be achieved.

Further, the first case (DPF case 41a) collects particulate matter in exhaust gas discharged from the engine, and the second case (SCR case 42a) purifies nitrogen oxide in the exhaust gas.

With this configuration, another member can be disposed by utilizing the first recess formed in the first case (DPF case 41a) that collects particulate matter in the exhaust gas or the second case (SCR case 42a) that purifies nitrogen oxide in the exhaust gas.

Further, the first recess (lower recess 41e and recess 42b) is formed in each of the first case (DPF case 41a) and the second case (SCR case 42a) (see Figs. 10C and 14).

With such a configuration, since other members can be disposed using the first recesses (lower recess 41e and recess 42b) formed in each of the first case (DPF case 41a) and the second case (SCR case 42a), space saving can be achieved.

Further, the first case (DPF case 41a) and the second case (SCR case 42a) are disposed side by side in the left-right direction (see Figs. 12A and 12B).

With such a configuration, the first case (DPF case 41a) and the second case (SCR case 42a) are disposed side by side in the left-right direction, and it is possible to reduce a vertical space necessary for installing the first case and the second case. Therefore, space saving can be achieved.

Further, an inclined surface 41f that is inclined backward and downward and faces forward and downward is formed in the first recess (lower recess 41e) (see Fig. 10C).

With such a configuration, the air can be guided rearward and downward by the inclined surface 41f. Therefore, it is possible to improve the flow of air to the member on the rear lower side of the first recess (lower recess 41e).

Further, in the first case (DPF case 41a), a second recess (upper recess 41d) to which the first nitrogen oxide sensor 62 that detects the concentration of nitrogen oxide in the exhaust gas is attached is formed (see Fig. 10C).

With such a configuration, since the first nitrogen oxide sensor 62 can be disposed using the second recess (upper recess 41d), space saving can be achieved.

The tractor 1 further includes the exhaust pipe 45 that is connected to the second case (SCR case 42a), guides the exhaust gas purified by the exhaust gas purification device 40, and is attached with the second nitrogen oxide sensor 63 that detects a concentration of nitrogen oxides in the exhaust gas (see Fig. 10A).

With such a configuration, the second nitrogen oxide sensor 63 can be disposed using the exhaust pipe 45.

Further, in the first case (DPF case 41a), a third recess (first left side recess 41b) to which the temperature sensor 64 that detects the temperature of the exhaust gas is attached is formed (see Fig. 10A).

With such a configuration, the temperature sensor 64 can be disposed using the third recess (the first left side recess 41b), so that space saving can be achieved.

Note that the tractor 1 according to the present embodiment is an embodiment of the working vehicle.

Further, the DPF case 41a according to the present embodiment is an embodiment of the first case.

Furthermore, the SCR case 42a according to the present embodiment is an embodiment of the second case.

Further, the lower recess 41e of the DPF case 41a and the recess 42b of the SCR case 42a according to the present embodiment are an embodiment of the first recess.

Further, the upper recess 41d according to the present embodiment is an embodiment of the second recess.

Further, the first left side recess 41b according to the present embodiment is an embodiment of the third recess.

Although the embodiment of the disclosure has been described above, the disclosure is not limited to the above configuration, and various modifications can be made within the scope of the disclosure described in the claims.

For example, in the above embodiment, the tractor 1 has been described as an example of the working vehicle, but other agricultural vehicles, construction vehicles, industrial vehicles, and the like may be used.

Further, the configuration (shape, size, number, arrangement, and the like) of each member described in the above embodiment is not limited, and can be arbitrarily changed.

For example, in the present embodiment, as illustrated in Fig. 3, the radiator 22, the oil cooler 23, the condenser 24, and the intercooler 25 are disposed in order from the rear in the engine room R, but the arrangement position of the radiator 22 and the like is not limited thereto. The arrangement of the radiator 22 and the like may be appropriately changed, for example, according to the size of the left-right width. For example, in a case where the left-right width W25 of the intercooler 25 is larger than the left-right width W24 of the condenser 24, the condenser 24 may be disposed on the front side of the intercooler 25.

Further, in the present embodiment, the oil cooler 23 and the condenser 24 are configured to slide (see Figs. 5 and 6), but the slidable cooling device is not limited thereto. For example, the intercooler 25 may be configured to slide.

Further, the configuration of the exhaust gas purification device 40 (see Fig. 9) is an example, and can be appropriately changed. For example, although the exhaust gas purification device 40 of the present embodiment includes the DPF 41, the SCR 42, and the like, the exhaust gas purification device 40 may further include a device different from that of the present embodiment, or a part of the device of the present embodiment may be omitted.

Although the plurality of recesses (first left side recess 41b and the like) are formed in the DPF case 41a (see Figs. 10A to 10C), the shape of the DPF case 41a is not limited to the present embodiment and can be changed as appropriate. For example, some of the plurality of recesses of the present embodiment can be omitted, or the position of the recess can be changed.

Although the support member 50 supports the connector 61a illustrated in Fig. 8, the electrical components supported by the support member 50 are not limited to the connector 61a, and can support various electrical components related to the exhaust gas purification device 40.

Although the plurality of recesses (tank housing recess 17a and the like) is formed in the fuel tank 17 (see Figs. 19A and 19B), the shape of the fuel tank 17 is not limited to the present embodiment and can be changed as appropriate. For example, some of the plurality of recesses of the present embodiment can be omitted, or the position of the recess can be changed.

Although the protruding portion 18a and the pump housing recess 18b are formed in the urea solution tank 18 (see Figs. 19A and 19B), the shape of the urea solution tank 18 is not limited to this embodiment, and can be appropriately changed. For example, the protruding portion 18a or the pump housing recess 18b of the present embodiment can be omitted, or the position of the protruding portion 18a or the like can be changed.

Although the front band member 82 is fixed to the support base 20 (see Fig. 18), a member (fixing member) to which the front band member 82 is fixed is not limited to the support base 20. For example, the front band member 82 may be fixed to the clutch housing 6 or the like.

Although the front band member 82 is formed in an inverted U shape in front view (see Fig. 18), the shape of the front band member 82 is not limited to this embodiment as long as it can surround the fuel tank 17 and the like. For example, the front band member 82 may be formed in a rectangular annular shape in front view.

## Claims

1. A working vehicle (1) comprising:
- an exhaust gas purification device (40) that purifies exhaust gas discharged from an engine (3); and
- a fulcrum portion (70) that is disposed on an upper side of the exhaust gas purification device (40) and is a rotation fulcrum of a hood (4).

2. The working vehicle (1) according to claim 1, wherein the exhaust gas purification device (40) includes:
- a first case (41a) that collects particulate matter in exhaust gas discharged from the engine (3); and
- a second case (42a) that purifies nitrogen oxides in the exhaust gas.

3. The working vehicle (1) according to claim 2, wherein the first case (41a) and the second case (42a) are disposed such that a longitudinal direction of the first case (41a) and the second case (42a) faces a front-rear direction, and are disposed side by side in a left-right direction.

4. The working vehicle (1) according to claim 2 or 3, further comprising:
- an outer member (56) that surrounds left and right outer sides and an upper side of the first case (41a) and the second case (42a),
wherein
- the fulcrum portion (70) includes a rotation shaft (72) that is provided on the outer member (56) and rotatably supports the hood (4).

5. The working vehicle (1) according to claim 4, further comprising a support member (50) that has the outer member (56) and supports the first case (41a) and the second case (42a).

6. The working vehicle (1) according to claim 5, wherein the support member (50) is formed in a frame shape surrounding an upper portion of the engine (3) from outside in a horizontal direction.

7. The working vehicle (1) according to claim 5, wherein the rotation shaft (72) is disposed so as to fit within a left-right width (W50) of the support member (50).
